# EUROPEAN PATENT SPECIFICATION

(11) **EP 4 417 516 B1**
(45) Date of publication and mention of the grant of the patent: **29.04.2026**
(21) Application number: 23214407.1
(22) Date of filing: 05.12.2023
(51) Int. Cl.: B64D 27/34, B64D 27/355, B64D 33/08, B64D 37/30

(54) **SYSTEMS, METHODS, AND APPARATUS FOR COOLING SUPERCONDUCTING MOTORS**
SYSTEME, VERFAHREN UND VORRICHTUNG ZUR KÜHLUNG SUPRALEITENDER MOTOREN
SYSTÈMES, PROCÉDÉS ET APPAREIL POUR REFROIDIR DES MOTEURS SUPRACONDUCTEURS

(30) Priority: 15.02.2023 US 202318169655
(43) Date of publication of application: 21.08.2024
(73) Proprietor: General Electric Company, Evendale, OH 45215 (US)
(72) Inventor: MINAS, Constantinos, Niskayuna, 12309 (US); STAUTNER, Ernst Wolfgang, Niskayuna, 12309 (US)
(74) Representative: Openshaw & Co.

(56) References cited:
- CN-A- 115 333 329
- GB-A- 2 548 123
- JP-A- 2006 136 071
- US-B2- 9 162 770

## Description

### FEDERALLY SPONSORED RESEARCH

This disclosure was made with Government support under contract number 80NSSC19M0125 awarded by the National Aeronautics and Space Administration. The Government has certain rights in this invention.

### FIELD OF THE DISCLOSURE

This disclosure relates generally to cooling systems, and, more particularly, to cooling systems for superconducting motors and methods for operating the same.

### BACKGROUND

Hydrogen-powered aircraft use hydrogen fuel as a power source. The hydrogen fuel may be stored as liquid hydrogen (LH2) in one or more cryogenic LH2 tanks. The LH2 can be vaporized into gaseous hydrogen (GH2) to be used as the fuel. In some examples, the GH2 is burned in gas turbine engines to generate thrust. In other examples, the GH2 is used to power a fuel cell to generate electricity to power a propulsor, such as a propeller. In such examples, the hydrogen-powered aircraft is referred to as a hydrogen (H2)-electric aircraft. GB 2 548 123 relates to an aircraft superconducting electrical propulsion system including an electric motor having superconducting stator windings and superconducting stator windings, cooled by a closed reverse Brayton cycle cryocooler. JP 2006-136071 relates to a superconducting motor device, that efficiently cools a superconducting coil and a normal conducting coil, using gasified liquid hydrogen.

### BRIEF DESCRIPTION OF THE DRAWINGS

A full and enabling disclosure of the preferred embodiments, including the best mode thereof, directed to one of ordinary skill in the art, is set forth in the specification, which makes reference to the appended Figures, in which:
FIG. 1 is an illustration of an example aircraft in which teachings disclosed herein can be implemented.
FIG. 2 is a schematic illustration of a known power management system for an aircraft.
FIG. 3 is a schematic illustration of an example subcooling power management system for superconducting motors in accordance with teachings disclosed herein.
FIG. 4a is a schematic illustration of an example first liquid hydrogen subcooling system that can be implemented in the subcooling power management system of FIG. 3.
FIG. 4b is a schematic illustration of an example second liquid hydrogen subcooling system that can be implemented in the subcooling power management system of FIG. 3.
FIG. 4c is a schematic illustration of an example third liquid hydrogen subcooling system that can be implemented in the subcooling power management system of FIG. 3.
FIG. 5a is a cross-sectional side view of an example first superconducting motor that can be implemented in the subcooling power management system of FIG. 3.
FIG. 5b is a cross-sectional side view of an example second superconducting motor that can be implemented in the subcooling power management system of FIG. 3.
FIG. 6 is a chart representing thermodynamic relationships of liquid hydrogen.
FIG. 7 is a block diagram of an example controller used in the example liquid hydrogen subcooling systems of FIGS. 4a-4c.
FIG. 8 is a flowchart representative of example operations that may be performed by the example subcooling power management system of FIG. 3.
FIG. 9 is a flowchart representative of example operations that may be performed by the example first, second, and third liquid hydrogen subcooling systems of FIGS. 4a-4c.
FIG. 10 is a flowchart representative of example machine readable instructions and/or example operations that may be executed by example processor circuitry to implement the example controller of FIG. 7.
FIG. 11 is a block diagram of an example processing platform including processor circuitry structured to execute the example machine readable instructions and/or the example operations of FIG. 10 to implement the example controller of FIG. 7.

The figures are not to scale. In general, identical reference numbers used throughout the drawing(s) indicate the same elements, and accompanying written descriptions refer to the same or like parts.

### DETAILED DESCRIPTION

SI equivalents of some units may be found at the end of the description.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements or method actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a ten percent margin.

As used herein, the terms "upstream" and "downstream" refer to the location along a fluid flow path relative to the direction of fluid flow. For example, with respect to a fluid flow, "upstream" refers to a location from which the fluid flows, and "downstream" refers to a location toward which the fluid flows. For example, with regard to an aircraft, a nose is said to be upstream of a tail relative to a flow direction of air flowing from the nose to the tail.

Electric aircraft are used over gas burning aircraft to reduce carbon dioxide emissions, increase energy efficiency, reduce noise, etc. Some electric aircraft include electric motors (e.g., brushed direct current (DC) motors, brushless DC motors, etc.) to drive (e.g., rotate) thrust-generating propulsors, such as propellers. In some examples, an electric motor of an electric aircraft weighs less than a piston engine that generates a similar amount of power. However, in some instances, the battery pack required to power the electric motor is heavier than the amount of fuel required to power a piston engine with a similar thrust generation capability.

To reduce the volume and weight consumed by battery packs, some electric aircraft include fuel cells (e.g., proton exchange membrane (or polymer electrolyte membrane) fuel cells (PEMFCs), etc.) to generate electricity during flight. A fuel cell is an electrochemical cell that converts chemical energy from a redox reaction between a fuel (e.g., hydrogen) and an oxidizing agent (e.g., oxygen) into electrical energy. The fuel cell includes an anode and a cathode with a polymer electrolyte membrane (PEM) that allows ions, such as positively charged hydrogen ions (i.e., protons), to move from the anode to the cathode. Typically, hydrogen fuel is channeled through a flow field plate to the anode and an oxidant (oxygen or air) is channeled through another flow field plate to the cathode. In some examples, a platinum catalyst at the anode causes the hydrogen to split into positively charged hydrogen ions and negatively charged electrons. The PEM allows only the positive ions to pass to the cathode, which gives the cathode a positive charge and causes the electrons to travel through an external circuit to the cathode, thus creating an electrical current. At the cathode, the electrons, hydrogen ions, and oxygen molecules combine to form water as a byproduct. In some examples, a single fuel cell generates one volt of electric potential in the form of direct current electricity. As such, multiple fuel cells are combined in series to create a fuel cell stack to generate enough electricity to power the electric aircraft.

Some electric aircraft use superconducting motors rather than typical electric motors to improve the efficiency (e.g., reduce resistive losses), increase the power density (e.g., reduce size and weight per power capacity), etc. Superconducting motors are made of superconducting materials (e.g., niobium-titanium, ceramic, etc.) that have a reduced electrical resistance when cooled to a temperature below a critical temperature of the material. For example, when a wire made of superconducting material is in a superconductive state, the wire can conduct 1000 amperes, whereas the same wire can only conduct 10 amperes in a non-superconductive state. Furthermore, an internal magnetic field of the superconducting materials is expelled when cooled to below the critical temperature, which increases the magnetic forces of the superconducting material, and provides more torque to a rotor or shaft. In some examples, the critical temperature of superconducting motors is 30 Kelvin (K). As such, a cryogenic cooling system is required to properly operate a superconducting motor.

For H2-electric aircraft, liquid hydrogen (LH2) is stored in one or more cryogenic tanks onboard (e.g., in the fuselage), pressurized to a desired pressure (e.g., 20 pounds per square inch (psi), 24 psi, etc.), and converted (e.g., vaporized) to gaseous hydrogen (GH2) before transmitted to the PEMFC(s) as fuel. In some examples, the GH2 is further pressurized before reaching the PEMFC. Because the LH2 fuel is kept at cryogenic temperatures, cooling systems can use the LH2 to both fuel the PEMFCs and cool the superconducting motor(s) to the critical temperatures. However, in some examples, the critical temperature of the superconducting materials is similar to (e.g., within 5K) the storage temperature of the LH2 fuel. For example, when the onboard LH2 tank stores the LH2 fuel between 30K and 31K, and the superconducting motor includes materials with a critical temperature of 30K, a heat exchanger cannot cool the superconducting motor to a temperature at or below the critical temperature. In other words, the temperature of the stored LH2 fuel is not low enough for a heat exchanger to transfer heat from the superconducting motor to the flowing LH2 fuel such that the temperature of the superconducting motor is at or below the critical temperature (e.g., 30K, 28K, 25K, etc.).

Example cooling systems for superconducting motors are disclosed herein that subcool LH2 flowing from onboard LH2 supply tank(s) to cool superconducting motors in a H2-electric aircraft. As used herein, "subcool," "subcooling," or other instances thereof refers to the act of cooling LH2 to a subcooled temperature (e.g., 15K, 18K, 20K, etc.), or a temperature that is below a storage temperature (e.g., 25K, 30K, 32K, etc.) and/or below a boiling point of LH2 (e.g., 20K). As such, subcooled LH2 refers to LH2 that has been cooled to the subcooled temperature.

Example cooling systems disclosed herein employ an LH2 subcooler including a split valve, an expansion valve, and a heat exchanger. The split valve splits the LH2 flow into a primary flowline, a secondary flowline, and an excess flowline. The secondary flowline is coupled to the expansion valve, which reduces the saturated pressure of the LH2. The saturated pressure of LH2 is directly proportional to the temperature of LH2. As such, when the saturated pressure of the LH2 in the secondary flowline is reduced, the temperature is also reduced.

The primary flowline and the secondary flowline are coupled to the heat exchanger, which is positioned downstream of the expansion valve. Heat is transferred from the primary flowline to the secondary flowline via the heat exchanger, thus subcooling the LH2 in the primary flowline. The LH2 in the primary flowline is then transmitted to the superconducting motor. Heat is transferred from the superconducting motor to the subcooled LH2. Thus, the subcooled LH2 cools the superconducting motor to temperatures at or below an associated critical temperature to ensure that the superconducting motor operates in the superconducting state.

The LH2 in the primary flowline is converted to GH2 downstream of the superconducting motor to be used as fuel for the PEMFCs. Downstream of the LH2 subcooler, the LH2 in the secondary flowline and the excess flowline is also converted to GH2 to be used as fuel for the PEMFCs. As such, none of the LH2 is wasted, and there is no vented GH2. That is, all the LH2 fuel is used either as coolant for the superconducting motor or as fuel for the fuel cell stacks. In some examples, multiple example cooling systems disclosed herein are coupled together to provide redundancy. Example cooling systems disclosed herein reduce the temperature of superconducting motors in hydrogen-electric aircraft to improve the performance of the superconducting motors. Furthermore, example cooling systems disclosed herein use all available LH2 fuel for cooling the superconducting motor and/or for powering the PEMFCs to reduce waste of LH2 fuel.

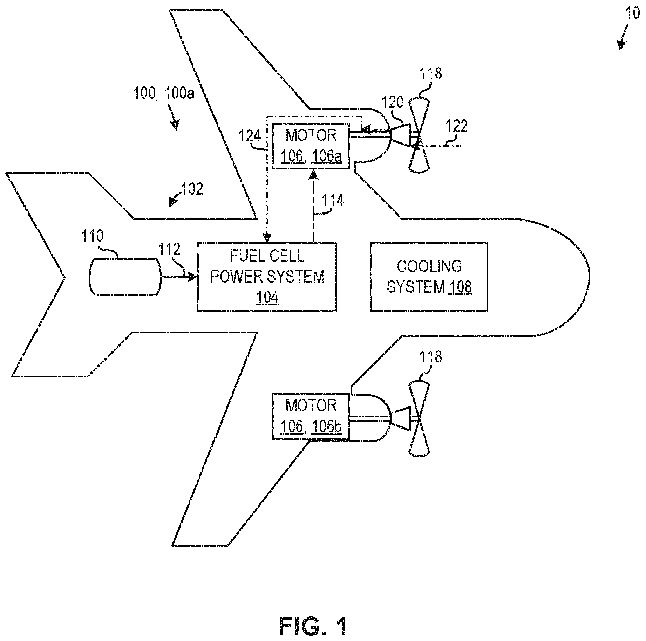

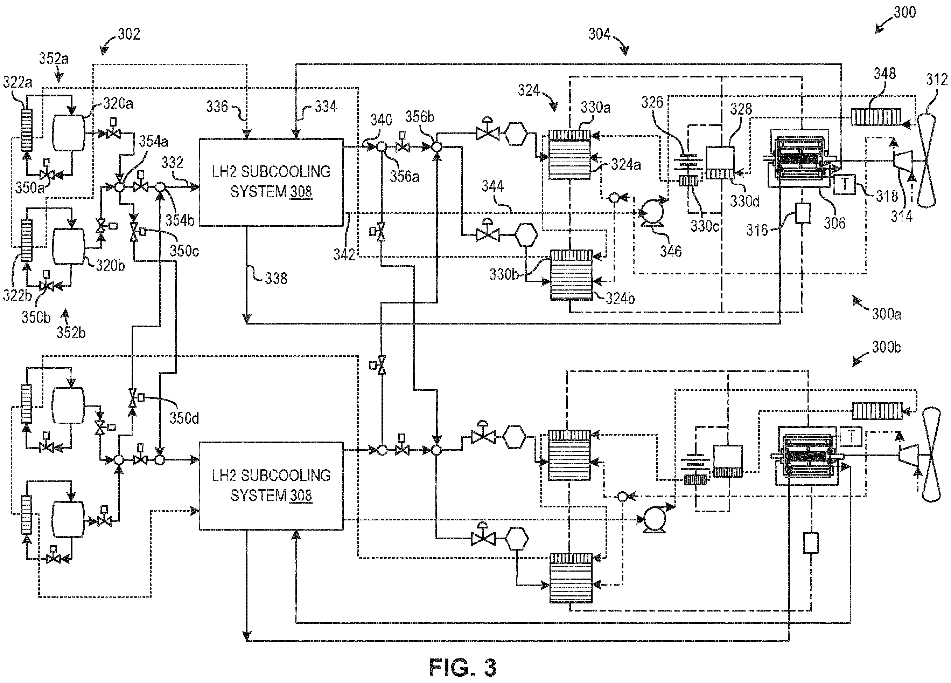

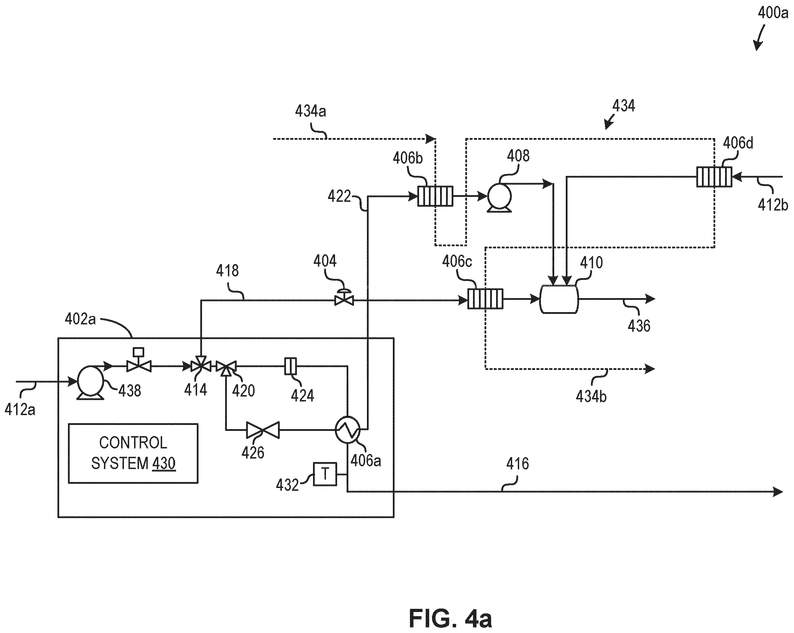

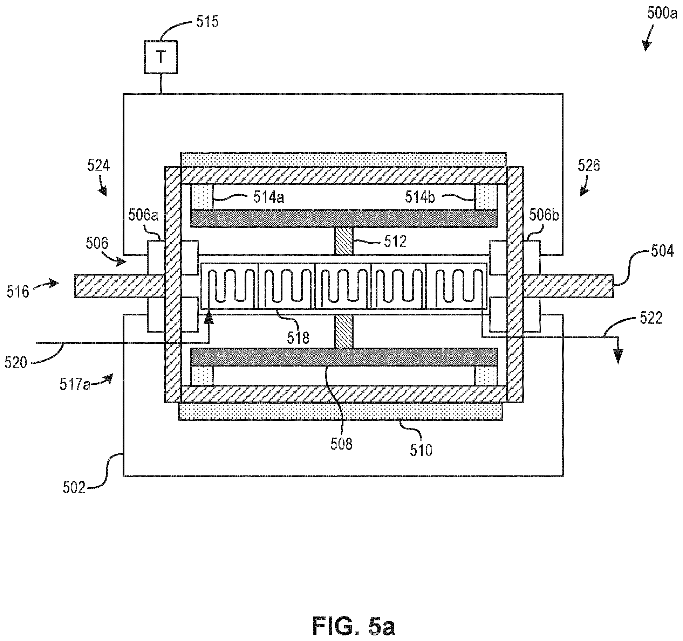

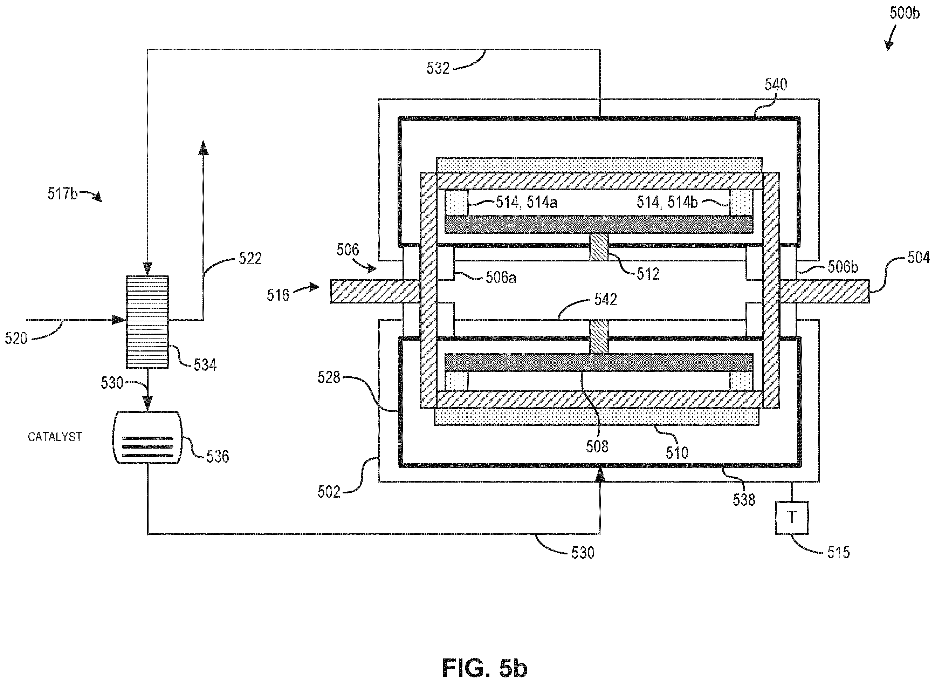

FIG. 1 is an example illustration of an aircraft 10 (e.g., a hydrogen-electric aircraft) including a power management system 100. In the illustrated example, the power management system 100 includes a fuel distribution system 102, a fuel cell power system 104, a motor 106, and a cooling system 108. The fuel distribution system 102 includes a tank 110 of to provide a flow of hydrogen via a hydrogen bus 112 to the fuel cell power system 104. The fuel cell power system 104 includes one or more fuel cell stacks to generate electrical power and transmit a flow of electricity via an electric bus 114 to the motor 106. In the illustrated example, the motor 106 converts the electricity into mechanical energy in the form of rotation of a propulsor 118 (e.g., a fan, a rotor, a propeller, etc.). The example aircraft 10 of FIG. 1 includes the cooling system 108 to reduce the temperature of components throughout the aircraft 10. For example, the cooling system 108 can cool the motor 106 to reduce wear, increase performance (e.g., efficiency, power output, etc.), reduce heat radiated to adjacent systems and/or components, etc. In some examples, the cooling system 108 absorbs heat from (e.g., cools) elements of the fuel cell power system 104, such as the PEMFCs, heat exchangers, batteries, etc. An example implementation of the power management system 100 is described below in connection with FIG. 3 and in accordance with teachings disclosed herein. Example implementations of the cooling system 108 are described below in connection with FIGS. 4A-4C. Example implementations of the motor 106 are described below in connection with FIGS. 5A and 5B.

In some examples, the fuel distribution system 102 includes a vaporizer to convert LH2 to GH2 downstream of the tank 110 and upstream of the fuel cell power system 104. In other examples, the fuel distribution system 102 includes a heat exchanger to transfer heat to the LH2, which converts the LH2 to GH2 to be usable as a fuel for the fuel cell stack(s) of the fuel cell power system 104. Furthermore, in some examples, the fuel distribution system 102 includes a compressor upstream of the fuel cell power system 104 to pressurize the GH2 fuel and drive the hydrogen molecules through field flow plates of the fuel cell stack(s).

The aircraft 10 of the illustrated example of FIG. 1 includes a compressor 120 to pressurize a flow of air 122 and drive the air 122 to the fuel cell power system 104 via an oxidizer bus 124. As such, the power management system 100 includes the compressor 120 and the oxidizer bus 124 to provide an oxidizing agent to the fuel cell stack(s). In some examples, the compressor 120 is an axial compressor coupled to the motor 106 and is rotatably interlocked with the propulsor 118. In some examples, the compressor 120 pressurizes the air 122 to a density that is suitable for the fuel cell power system 104. In other examples, the power management system 100 includes a pump coupled to the oxidizer bus 124 to further pressurize the air 122 downstream of the compressor 120.

In the illustrated example of FIG. 1, the aircraft 10 includes two motors 106 and two propulsors 118 that are similar or identical to each other to generate motive thrust. In some examples, the power management system 100 is a first power management system 100a, and the motor 106 is a first motor 106a. In such examples, a second motor 106b is associated with a second power management system similar or identical to the first power management system 100a. In some examples, the aircraft 10 only includes the first motor 106a. In other examples, the power management system 100 includes additional motors 106 other than the first and second motors 106a, 106b (e.g., two, three, five additional motors, etc.).

In the illustrated example of FIG. 1, the example tank 110 is a cryogenic tank that can store hydrogen in various states, such as liquid, gaseous, etc. The tank 110 contains the LH2 at a cryogenic temperature (e.g., between 15K and 32K, etc.) associated with a saturated pressure (e.g., between two and 142 psi, etc.). For example, the tank 110 can store LH2 at 30K. The LH2 experiences boil-off at a certain evaporation rate, and the evaporated GH2 condenses back into LH2 at a condensation rate. When the evaporation rate and the condensation rate are equal, and when the temperature stays relatively constant, the LH2 is said to be in equilibrium and is pressurized to the saturated pressure (e.g., 120 psi, etc.). The example tank 110 can be stored in any suitable location on the aircraft (e.g., in the wings, in the fuselage, in an external tank, etc.). In some examples, the fuel distribution system 102 includes multiple tanks (e.g., the tank 110 and one, two, three other tanks, etc.).

In example illustrations disclosed herein, solid lines represent hydrogen (e.g., LH2, GH2, etc.), long-and-short-dashed lines represent electricity, dash-and-dot lines represent oxidizer(s) (e.g., air, oxygen, etc.), and dashed lines represent coolant(s) (e.g., ethylene glycol, supercritical carbon dioxide, liquid helium, etc.). Although the aircraft 10 shown in FIG. 1 is an airplane, examples disclosed herein may also be applicable to other fixed-wing aircraft, including unmanned aerial vehicles (UAV). Furthermore, although the illustrated example of FIG. 1 includes one power management system 100, the aircraft 10 can include multiple power management systems (e.g., the power management system 100 and one, three, five others, etc.). In some examples, a selection of the number of power management systems 102 included in the aircraft 10 is based on the amount of thrust required for the aircraft 10.

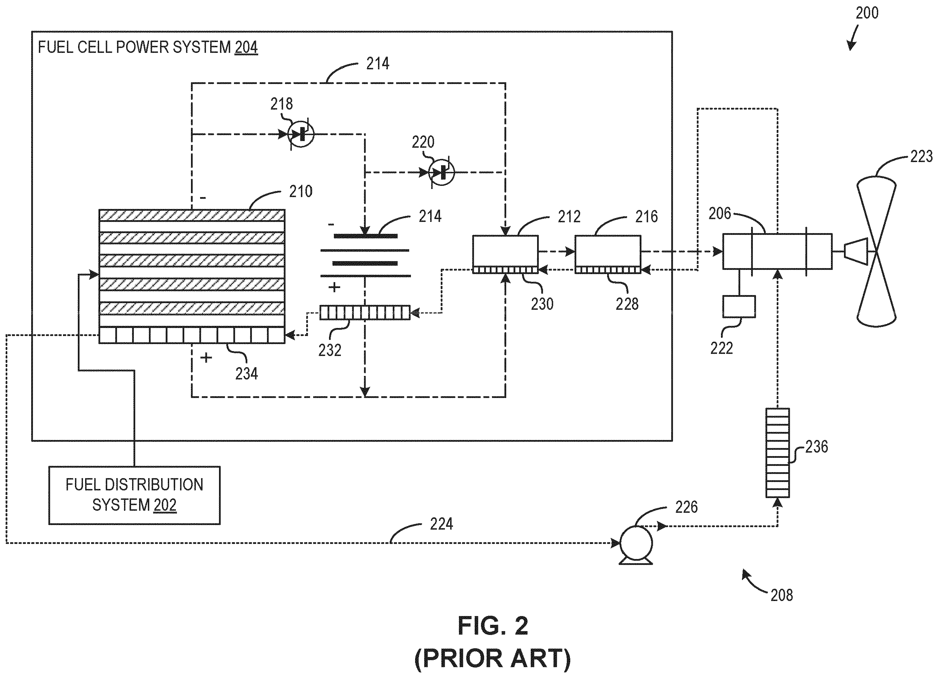

FIG. 2 is a schematic illustration of a known power management system 200 for an aircraft (e.g., the aircraft 10 of FIG. 1). The power management system 200 includes a fuel distribution system 202, a fuel cell power system 204, a motor 206, and a cooling system 208. The fuel distribution system 202 can include one or more tanks (e.g., tank 110, etc.), vaporizers, heat exchangers, compressors (e.g., pumps, etc.), etc., to convert LH2 fuel to GH2 and to drive the GH2 to the fuel cell power system 204. The fuel cell power system 204 includes a fuel cell stack 210 to convert chemical energy of a redox reaction between the GH2 fuel and an oxidizing agent (e.g., air, etc.) into electrical energy. The fuel cell stack 210 of FIG. 2 may obtain the oxidizer from a vent, the motor 206, a compressor, an onboard tank, etc. The fuel cell power system 204 includes an electric bus 212 electrically coupled to the fuel cell stack 210 to channel and/or meter the electricity transmitted to the motor 206. The electrical bus 212 is further coupled to a battery 214 and a converter 216. The battery 214 may be a dual cell battery and stores a portion of the generated electricity as an auxiliary and/or redundant power source. Furthermore, the fuel cell power system 204 includes a first switch 218 and a second switch 220 to control the amount of electrical power provided to the battery 214, the electric bus 212, and/or the motor 206.

In some examples, the first and second switches 218, 220 are silicon-controlled switches to permit and/or restrict electrical current. To charge the battery 214 using the fuel cell stack 210, the first switch 218 is opened and the second switch 220 may or may not be closed. To power the motor 206 using only the fuel cell stack 210, the first and second switches 218, 220 are closed. To power the motor 206 using both the fuel cell stack 210 and the battery 214, the first switch 218 may or may not be opened and the second switch 220 is opened. In some examples, the motor 206 operates on alternating current (AC) electricity, and the converter 216 is a DC/AC converter to transform the DC electricity from the fuel cell stack 210 and/or the battery 214 into the AC electricity for the motor 206. In other examples, the motor 206 operates on DC electricity, and the converter 216 is a DC/DC converter to adjust the level of voltage across the converter 216.

The power management system 200 of FIG. 2 includes the motor 206, a motor control unit 222, and a propulsor 223 to generate thrust for the aircraft. In some examples, the motor 206 is an electric motor that operates on AC power to drive the propulsor 223. In other examples, the motor 206 is a DC motor. The power management system 200 includes the cooling system 208 to cool the motor 206 during operation. Furthermore, the cooling system 208 of FIG. 2 includes a coolant bus 224 to channel a coolant to the various components of the system. As such, the cooling system 208 includes a coolant pump 226 to drive the coolant through the coolant bus 224. The coolant bus 224 is fluidly coupled to the motor 206, a first heat exchanger 228, a second heat exchanger 230, a third heat exchanger 232, and a fourth heat exchanger 234. Thus, the coolant flowing through the coolant bus 224 cools the motor 206, the converter 216, the electric bus 212, the battery 214, and the fuel cell stack 210 in flow serial order. Based on the flow path of the coolant bus 224 in FIG. 2, the coolant downstream of the fourth heat exchanger 234 is warmer than the coolant upstream of the motor 206. To maintain the cooling capability of the coolant, the cooling system 208 includes a fifth heat exchanger 236 (e.g., an air-cooled cooler, etc.) to cool the coolant upstream of the motor 206. Conventional hydrogen-electric aircraft that implement the power management system 200 of FIG. 2 cannot use a superconducting motor because the cooling system 208 uses coolant (e.g., ethylene glycol, etc.) to reduce the temperature of the motor 206. Example subcooling power management systems disclosed herein can cool superconducting motors for hydrogen-electric aircraft such that the superconducting motor can operate in the superconducting state.

FIG. 3 is a schematic illustration of an example subcooling power management system 300 in accordance with teachings disclosed herein. In the illustrated example, the subcooling power management system 300 of FIG. 3 includes a first subcooling power management system 300a and a second subcooling power management system 300b. The first subcooling power management system 300a or the second subcooling power management system 300b can implement the power management system 100 of FIG. 1. In the illustrated example of FIG. 3, the first subcooling power management system 300a is similar to the second subcooling power management 300b. As such, descriptions disclosed herein in connection with the subcooling power management system 300 can apply to both the first and second subcooling power management systems 300a, 300b.

In the illustrated example of FIG. 3, the subcooling power management system 300 includes an LH2 distribution system 302, a fuel cell power system 304, a superconducting (SC) motor 306, and an LH2 subcooling system 308. The subcooling power management system 300 includes the SC motor 306 to improve the performance relative to electric motors (e.g., the motor 206 of FIG. 2, etc.). For example, the SC motor 306 can have increased power density, reduced volume, increased efficiency, and/or increased power output relative to conventional electric motors. The subcooling power management system 300 further includes a propulsor 312, a compressor 314, a motor controller unit 316, and a temperature sensor 318. The LH2 distribution system 302 includes a plurality of LH2 tanks 320 (e.g., a first LH2 LH2 tank 320a, a second LH2 tank 320b, etc.), a first heat exchanger 322a, and a second heat exchanger 322b. The fuel cell power system 304 includes a plurality of fuel cell stacks 324 (e.g., a first fuel cell stack 324a, a second fuel cell stack 324b, etc.), a battery 326, a converter 328, a first heat sink 330a, a second heat sink 330b, a third heat sink 330c, and a fourth heat sink 330d.

The SC motor 306 is made of materials (e.g., niobium-titanium, etc.) that operate in a superconducting state when cooled to a temperature that satisfies (e.g., is less than) a superconducting threshold (e.g., a critical temperature). For example, the superconducting threshold can be 30K based on a component (e.g., an armature winding, etc.) of the SC motor 306 being made of niobium-titanium. The subcooling power management system 300 includes the temperature sensor 318 to measure the operating temperature of the SC motor 306. Thus, the temperature sensor 318 can be used to determine whether the temperature of the SC motor 306 satisfies the superconducting threshold.

The subcooling power management system 300 uses the cryogenic LH2 fuel as the cooling agent for the superconducting motor 306. However, in some examples, the first and second LH2 tanks 320a, 320b store the LH2 at a temperature (e.g., 25K, 30K, 31K, etc.) that is similar to the critical temperature of the superconducting motor 306. As such, the LH2 fuel cannot effectively cool the superconducting motor 306 without first being subcooled. Thus, the LH2 subcooling system 308 cools the LH2 below the storage temperature and/or below the boiling point of LH2 (or 20K). In other words, the subcooling power management system 300 employs the LH2 subcooling system 308 to cool the LH2 fuel to a temperature that satisfies a subcooled threshold, which is less than the superconducting threshold.

In some examples, the subcooled threshold is similar to the boiling point of LH2 (e.g., 15K, 18K, 20K, etc.), and the superconducting threshold is similar to the storage temperature of the LH2 (e.g., 25K, 30K, 32K, etc.). Furthermore, the LH2 subcooling system 308 can ensure that the superconducting motor 306 operates below the superconducting threshold. Further examples and implementations of the LH2 subcooling system 308 are described below in connection with FIGS. 4A-4C.

The subcooling power management system 300 of FIG. 3 includes the first and second fuel cell stacks 324a, 324b to power the SC motor 306 or charge the battery 326. In some examples, the plurality of fuel cell stacks 324 includes at least one of a low temperature proton exchange membrane (PEM) fuel cell stack that is liquid-cooled to a low temperature (e.g., 300K, 350K, 400K, etc.) using a coolant, such as ethylene glycol, etc. In some examples, the plurality of fuel cell stacks 324 includes at least one of a low temperature (PEM) fuel cell stack that is air-cooled to the low temperature using compressed air from the compressor 314. In some examples, the plurality of fuel cell stacks 324 includes at least one high temperature (PEM) fuel cell stack that is air-cooled to a high temperature (e.g., 425K, 450K, 475K, etc.) using compressed air from the compressor 314.

In the illustrated example of FIG. 3, the subcooling power management system 300 includes a first LH2 input flowline 332, a second LH2 input flowline 334, a coolant input flowline 336, an LH2 output flowline 338, a GH2 output flowline 340, and a coolant output flowline 342 associated with the LH2 subcooling system 308. The subcooling power management system 300 includes the first LH2 input flowline 332 to transmit the LH2 from the LH2 distribution system 302 to the LH2 subcooling system 308 at the cryogenic temperature associated with the first and second tanks 312a, 312b. The LH2 subcooling system 308 then transmits the subcooled LH2 to the superconducting motor 306 via the LH2 output flowline 338. After cooling the motor 306, the LH2 is returned to the LH2 subcooling system 308 for conversion to GH2 and transmission to the fuel cell management system 304 via the second LH2 output flowline 340.

In some examples, the LH2 subcooling system 308 couples the coolant input flowline 336 and the coolant output flowline 342 to define a coolant bus 344. The subcooling power management system 300 of FIG. 3 includes the coolant bus 344 to transfer heat between various components and/or systems throughout the subcooling power management system 300. Furthermore, the subcooling power management system 300 includes a coolant pump 346 to drive the coolant through the coolant bus 344. The coolant flows from the coolant pump 346 through a third heat exchanger 348 to reduce the temperature of the coolant. In some examples, the third heat exchanger 348 is an air-cooled cooling heat exchanger that that utilizes cold atmospheric air (e.g., air at 222K, etc.) to absorb heat from the coolant bus 344.

In serial flow order, the coolant flows from the third heat exchanger 348 to the fuel cell power system 304, the LH2 distribution system 302, the LH2 subcooling system 308, and back to the coolant pump 346. More specifically, the coolant flows from the third heat exchanger 348 to: (i) the fourth heat sink 330d to cool the converter 328, (ii) the third heat sink 330c to cool the battery 326, (iii) the first heat sink 330a to cool the first fuel cell stack 324a, and (iv) the second heat sink 330b to cool the second fuel cell stack 324b. Thus, the temperature of the coolant rises across the fuel cell power system 304. For example, the first and second fuel cell stacks 324a, 324b may generate 33 kilowatt hours (kWh) of energy at 50% efficiency, meaning that 16.5kWh of electrical energy and 16.5kWh of heat are generated. As such, the coolant recovers the waste heat generated by the fuel cell power system 304 and uses the heat to vaporize the LH2 throughout the subcooling power system 300, as described below. In some examples, the coolant flows in a different serial flow order through the fuel cell power system 304 (e.g., to cool the second fuel cell stack 324b prior to the first fuel cell stack 324a, etc.).

The coolant flows to the first heat exchanger 322a and the second heat exchanger 322b to vaporize LH2 from the first LH2 tank 320a and the second LH2 tank 320b, respectively. More specifically, the LH2 distribution system 302 includes a first automatic valve 350a and a second automatic valve 350b to implement a first thermosiphon loop 352a and a second thermosiphon loop 352b for the first and second LH2 tanks 320a, 320b. The LH2 distribution system 302 includes the first thermosiphon loop 352a to provide a positive net pressure to the subcooling power management system 300. In other words, the first thermosiphon loop 352a automatically provides a consistent vapor pressure within the first LH2 tank 320a to cause the LH2 to flow downstream to the LH2 subcooling system 308. In some examples, the first LH2 tank 320a includes a pressure sensor to detect the vapor pressure acting on the walls of the LH2 tank 320a and the surface of the LH2. When the vapor pressure falls below a certain value (e.g., 12 bar, etc.), the first automatic valve 350a opens and causes a portion of the LH2 to flow to the first heat exchanger 322a. The first heat exchanger 322a transfers heat from the coolant to the LH2, thus converting the LH2 to GH2. The GH2 then flows back into the first LH2 tank 320a to increase the vapor pressure. The automatic valve 350a closes when the vapor pressure reaches the desired value. In some examples, the first thermosiphon loop 352a includes a pump to further pressurize the GH2 downstream of the first heat exchanger 322a. In the illustrated example of FIG. 3, the second thermosiphon loop 352b is similar to the first thermosiphon loop 352a such that descriptions made in connection with the first thermosiphon loop 352a also apply to the second thermosiphon loop 352b.

In the illustrated example of FIG. 3, the subcooling power management system 300 includes junctions to fluidly couple the first subcooling power management system 300a and the second subcooling power management system 300b. More specifically, the subcooling power management system 300 includes a first LH2 junction 354a, a second LH2 junction 354b, a first GH2 junction 356a, and a second GH2 junction 356b. The junctions 354a, 354b, 356a, 356b join two or more flowlines to variably allow the LH2 and the GH2 to flow between the first and second subcooling power management systems 300a, 300b for redundancy. For example, when the second subcooling power management system 300b uses up a stored LH2 supply before the first subcooling power management system 300a, the subcooling power management system 300 can open a third automatic valve 350c to transfer LH2 from the first LH2 junction 354a to the second subcooling power management system 300b. Similarly, the subcooling power management system 300 can open a fourth automatic valve 350d to transfer LH2 from the second subcooling power management system 300b to the second LH2 junction 354b. Likewise, the subcooling power management system 300 can open a fifth automatic valve 350e to transfer GH2 from the first GH2 junction 356a to the second subcooling power management system 300b or a sixth automatic valve 350f to transfer GH2 from the second subcooling power management system 300b to the second GH2 junction 356b based on the fuel requirements for the respective fuel cell stacks (e.g., the first fuel cell stack 324a, etc.).

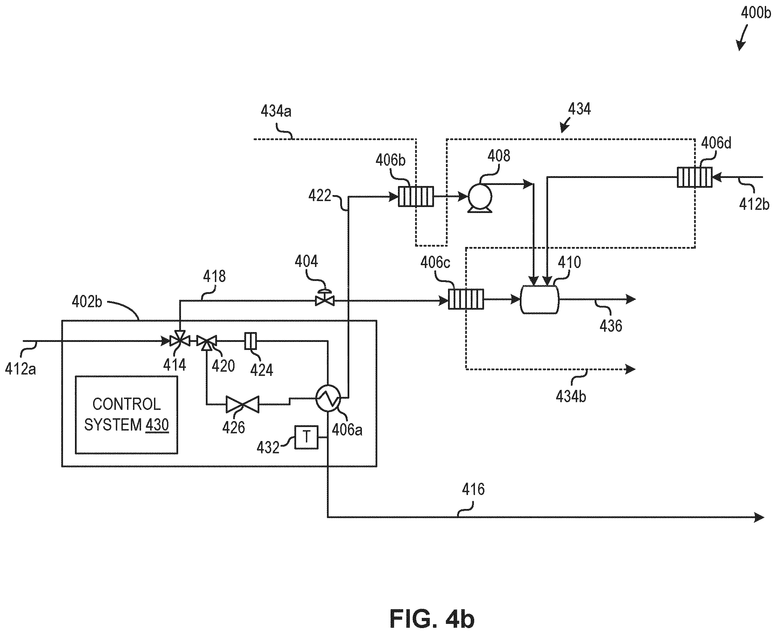

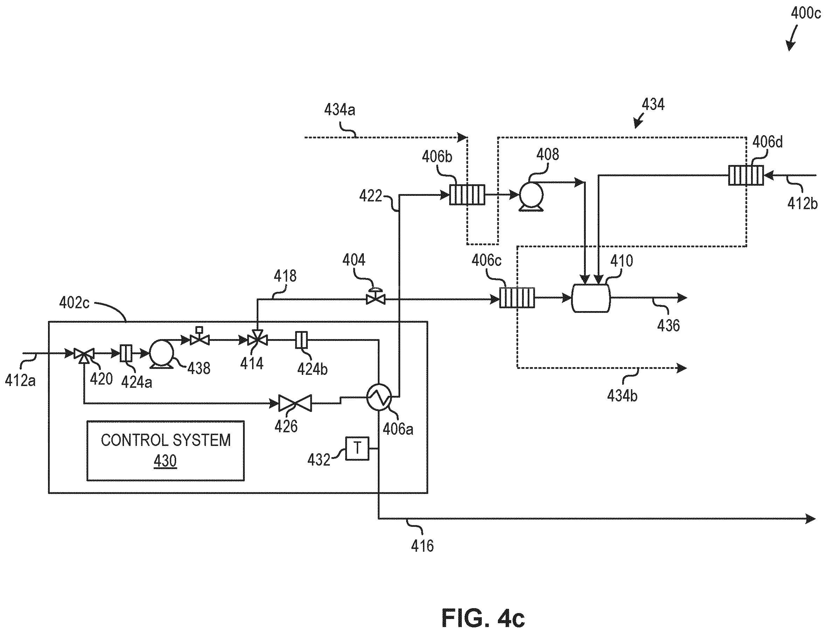

FIG. 4a is a schematic illustration of an example first LH2 subcooling system 400a (or apparatus) in accordance with teachings disclosed herein. FIG. 4b is a schematic illustration of an example second LH2 subcooling system 400b (or apparatus) in accordance with teachings disclosed herein. FIG. 4c is a schematic illustration of an example third LH2 subcooling system 400c (or apparatus) in accordance with teachings disclosed herein. The first LH2 subcooling system 400a, the second LH2 subcooling system 400b, and/or the third LH2 subcooling system 400c can implement the LH2 subcooling system 308 of FIG. 3. Descriptions of elements in FIG. 4a can also apply to like elements of FIGS. 4b and 4c with the same reference numerals. In the illustrated examples of FIGS. 4a-4c, the first LH2 subcooling system 400a includes a first LH2 subcooler 402a, the second LH2 subcooling system 400b includes a second LH2 subcooler 402b, and the third LH2 subcooling system 400c includes a third LH2 subcooler 402c. Furthermore, the first, second, and third LH2 subcooling systems 400a, 400b, 400c include a pressure control valve 404, a first heat exchanger 406a, a second heat exchanger 406b, a third heat exchanger 406c, a fourth heat exchanger 406d, a compressor 408, and a buffer tank 410.

In the illustrated example of FIG. 4a, the first LH2 subcooling system 400a includes a first LH2 input flowline 412a to transmit a flow of LH2 from an LH2 distribution system (e.g., the LH2 distribution system 302 of FIG. 3) to the first LH2 subcooler 402a. In some examples, the first LH2 input flowline 412a is fluidly coupled to the plurality of LH2 tanks 320 (FIG. 3) and the first LH2 subcooler 402a. In some examples, the first LH2 input flowline 412a corresponds to the first LH2 input flowline 332 of FIG. 3.

In the illustrated example of FIG. 4a, the first LH2 subcooler 402a includes a first split valve 414 to split the flow of LH2 into a primary flowline 416 and an excess flowline 418. The first LH2 subcooler 402a further includes a second split valve 420 to split the flow of LH2 into the primary flowline 416 and a secondary flowline 422. In some examples, the first and/or second split valve(s) 414, 420 are variable flow valves, such as proportional control valves. In such examples, the second split valve 420 can adjust (e.g., simultaneously change) a first flowrate (e.g., a mass flowrate, a volumetric flowrate, etc.) of the LH2 in the secondary flowline 422 and a second flowrate of the LH2 in the primary flowline 416. Similarly, the first split valve 414 can adjust the second flowrate through the primary flowline 416 and a third flowrate of the LH2 in the excess flowline 418. For example, the second split valve 420 can split a flow of LH2 into a 90/10 ratio, in which the second flowrate comprises 90% of the flow and the first flowrate comprises 10% of the flow. In other examples, the first and/or second split valve(s) 414, 420 are manual control valves set to permit an equal flowrate (e.g., a 50/50 ratio) of LH2 through the connected flowlines. Additionally or alternatively, the first LH2 subcooler 402a can include an orifice 424 having an effective area that allows a certain flowrate based on an upstream pressure of the LH2. The orifice 424 can restrict flow of the LH2 to a certain flowrate that sets an upper limit for a flow ratio that the second split valve 420 can provide. For example, the second flowrate in the primary flowline 416 upstream of the orifice 424 may be 50 kilograms per second (kg/s), and the orifice 424 may allow a 30 kg/s. In such an example, the second split valve 420 can provide ratios of flowrates that are less than or equal to 60/40.

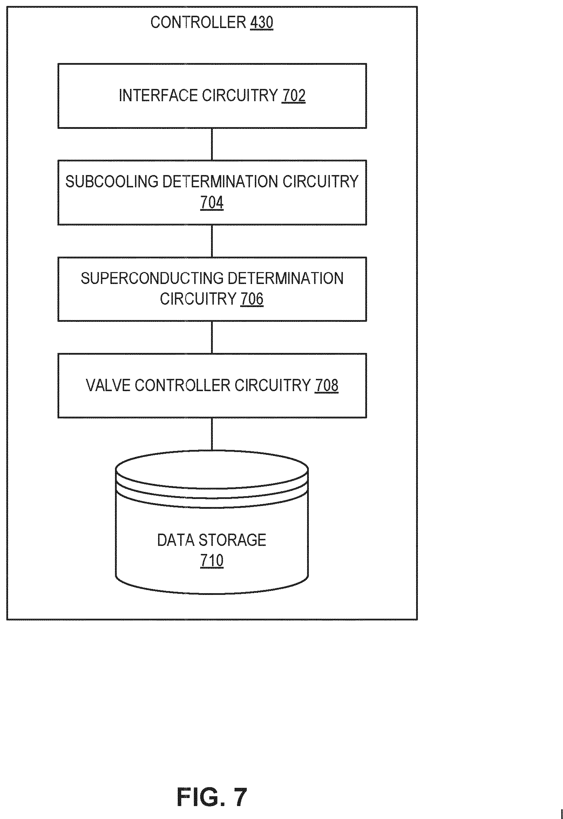

In the illustrated example of FIG. 4a, the first LH2 subcooler 402a includes an expansion valve 426 to reduce the saturated pressure of the LH2 in the secondary flowline 422. As described below in connection with FIG. 7, the temperature of LH2 is based on the saturated pressure. As such, the expansion valve 426 reduces the temperature of the LH2 in the secondary flowline 422 by reducing the saturated pressure. In some examples, the expansion valve 426 restricts flow of the high pressure (e.g., 175psi, 250psi, 350psi, etc.) LH2, which causes the saturated pressure to reduce to a low pressure (e.g., 2psi, 15 psi, 20psi, etc.) and the temperature to reduce to a subcooled temperature (e.g., 14K, 20K, 21K, etc.) in the secondary flowline 422. In some examples, the expansion valve 426 reduces the saturated pressure by a certain amount, such as 150psi, 230psi, 335psi, etc. In other examples, the expansion valve 426 reduces the saturated pressure to a certain value, such as 20psi. In some examples, the expansion valve 426 reduces the saturated pressure by the certain amount and/or to the certain value regardless of the upstream pressure.

The first LH2 subcooler 402a includes the first heat exchanger 406a to subcool the LH2 in the primary flowline 416 and warm the LH2 in the secondary flowline 422. In some examples, the primary flowline 416 and the secondary flowline 422 flow through sets of tubes and/or plates within the first heat exchanger 406a. The tubes can be supported by other components, for example fans, condensers, coolants, plates, baffles, tie-rods, spacers, etc. The first heat exchanger 406a enables the primary flowline 416 to indirectly contact the secondary flowline 422, so the streams of LH2 do not mix, and the primary flowline 416 transfers heat to the secondary flowline 422. The first heat exchanger 406a of the illustrated example can be a single pass exchanger and/or a multi pass exchanger with the LH2 flowing in a cross flow, counter flow, or parallel flow pattern.

In the illustrated example of FIG. 4a, the first LH2 subcooling system 400a includes a controller 430 (e.g., control system, controlling device, etc.) to regulate the output temperature of the first LH2 subcooler 402a. Furthermore, the controller 430 regulates the flowrate of subcooled LH2 out of the first LH2 subcooler 402a. In the illustrated example, the first LH2 subcooling system 400a also includes a temperature sensor 432 (e.g., a cryogenic silicon sensor, platinum resistance sensor, cryogenic temperature monitor, etc.) to measure the temperature of the LH2 within the primary flowline 416 downstream of the first heat exchanger 406a. In some examples, the temperature sensor 432 is positioned downstream of the first LH2 subcooler 402a.

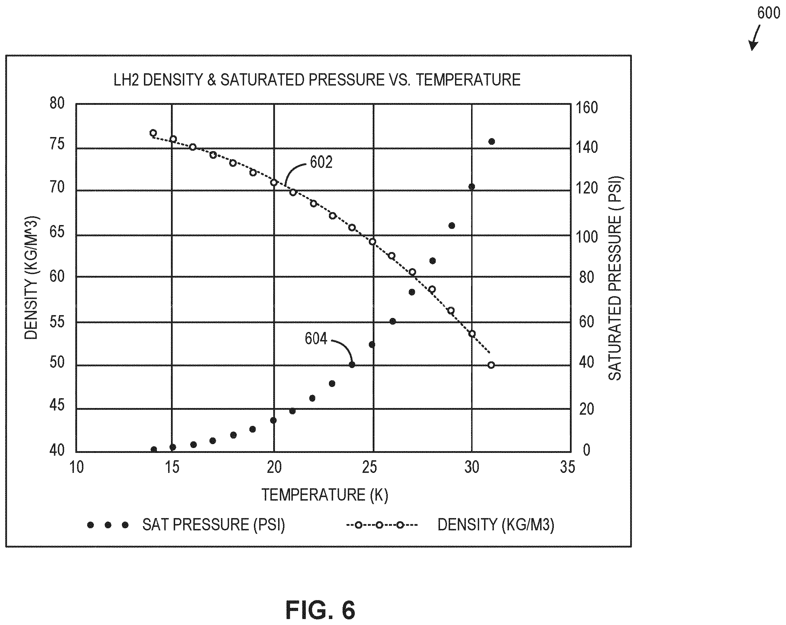

The controller 430 can obtain a first temperature measurement from the temperature sensor 432, determine whether the LH2 temperature satisfies (e.g., is lower than) the subcooling threshold, and adjust the flowrates through the second split valve 420 based on the determination. For example, when the first temperature (e.g., 25K) does not satisfy the subcooled threshold (e.g., 20K), then the controller 430 can cause the second split valve 420 to reduce the flowrate in the primary flowline 416 and increase the flowrate in the secondary flowline 422 (e.g., adjust the 9:1 flow ratio to an 4:1 flow ratio). Furthermore, the controller 430 can obtain a second temperature measurement from another temperature sensor (e.g., the temperature sensor 318 of FIG. 3) that is coupled to the superconducting motor (e.g., the superconducting motor 306 of FIG. 3). The controller 430 determines whether the second temperature satisfies the superconducting threshold and adjusts the flowrates through the first split valve 414 accordingly. For example, when the second temperature (e.g., 35K) does not satisfy the superconducting threshold (e.g., 30K), then the controller 430 can cause the first split valve 414 to reduce the flowrate in the excess flowline 418 and increase the flowline in the primary flowline 416. An example implementation of the controller 430 is described below in connection with FIG. 6.

In the illustrated example of FIG. 4a, the LH2 subcooling system includes a coolant bus 434. In some examples, the coolant bus 434 corresponds to the coolant bus 344 of FIG. 3. Furthermore, in some examples, the coolant bus 434 includes an input coolant flowline 434a and an output coolant flowline 434b that correspond to the input and output coolant flowlines 336, 342 of FIG. 3, respectively. The coolant bus 434 is coupled to the second, third, and fourth heat exchangers 406b, 406c, 406d to convert flowing LH2 into GH2 fuel. More specifically, the coolant bus 434 heats the LH2 in the excess flowline 418 and the secondary flowline 422 downstream of the first LH2 subcooler 402a.

Furthermore, the coolant bus 434 heats LH2 from the primary flowline 416 downstream of a superconducting motor (e.g., the superconducting motor 306 of FIG. 3). In other words, the subcooled LH2 leaves the first LH2 subcooling system 400a via the primary flowline 416, cools the SC motor, and then returns to the first LH2 subcooling system 400a via a second LH2 input flowline 412b. As such, in some examples, the second LH2 input flowline 412b is fluidly coupled to the SC motor 306 and the fourth heat exchanger 406d. The primary flowline 416 and the second LH2 input flowline 412b can correspond to the LH2 output flowline 338 and the second LH2 input flowline 334 of FIG. 3, respectively.

In the illustrated example, the secondary flowline 422 leads to the second heat exchanger 406b, the compressor 408, and the buffer tank 410. The LH2 in the secondary flowline 422 has a reduced saturated pressure due to the expansion valve 426. Thus, the GH2 downstream of the second heat exchanger 406b may not be pressurized enough to flow into the buffer tank 410. As such, first LH2 subcooling system 400a includes the compressor 408 to drive the GH2 into the buffer tank 410 and to enable use of the GH2 as fuel. In the illustrated example, the excess flowline 418 leads from the first LH2 subcooler 402a to the pressure control valve 404, the third heat exchanger 406c, and the buffer tank 410. The pressure control valve 404 can lower the saturated pressure of the LH2 down to another value (e.g., 40psi, 60psi, 80psi, etc.) such that when the LH2 reaches the third heat exchanger 406c, the LH2 vaporizes into GH2, and the pressure still drives the flow into the buffer tank 410.

In the illustrated example of FIG. 4a, the first LH2 subcooling system 400a includes the buffer tank 410 to collect the GH2 fuel. Furthermore, the buffer tank 410 includes an LH2 output flowline 436 to transmit the GH2 fuel to one or more fuel cell stacks (e.g., the first fuel cell stack 324a, the second fuel cell stack 324b, etc.). In some examples, the LH2 output flowline 436 corresponds to the second LH2 output flowline 340 of FIG. 3. In some examples, the buffer tank 410 includes a regulator valve to control the flowrate and/or the output pressure to the fuel cell stack(s). Although one buffer tank 410 is illustrated in FIG. 4a, the first LH2 subcooling system 400a can include more buffer tanks 410 to better meter the flow of GH2 fuel to the fuel cell stack(s).

In the illustrated example of FIG. 4a, the first LH2 subcooler 402a includes an LH2 pump 438 to increase the saturated pressure of the LH2 in the primary flowline 416 and the secondary flowline 422. Thus, the LH2 pump 438 ensures that the saturated pressure in the primary flowline 416 overcomes a pressure drop across the SC motor. As the LH2 in the primary flowline 416 flows through the SC motor, the saturated pressure can drop by an amount (e.g., 150psi, 200psi, etc.) based on the type of heat exchanger used in the motor. As such, the LH2 pump 438 can pressurize the LH2 in the primary, secondary, and excess flowlines 416, 422, 418 up to a high saturated pressure (e.g., 350 psi) to cause the LH2 to flow downstream of the SC motor despite the pressure drop. Furthermore, first LH2 subcooling system 400a includes the LH2 pump 438 to facilitate heat transfer from the primary flowline 416 to the secondary flowline 422 via the first heat exchanger 406a. In other words, the LH2 pump 438 pressurizes both the primary and secondary flowlines 416, 422 to a similar saturated pressure to increase the amount of heat transferred from the primary flowline 416 to the secondary flowline 422. In some examples, the primary flowline 416, the excess flowline 418, and the secondary flowline 422 include thicker walls to safely contain the pressurized LH2.

Referring now to FIG. 4b, the second LH2 subcooling system 400b includes a second LH2 subcooler 402b to provide subcooled LH2 to the SC motor. Similar to the first LH2 subcooler 402a, the second LH2 subcooler 402a splits the flow of LH2, expands the secondary flowline 422, and subcools the primary flowline 418 based on heat transfer via the first heat exchanger 406a. However, the second LH2 subcooler 402b does not include an LH2 pump (e.g., the LH2 pump 438 of FIG. 4a). As such, the primary flowline 416, excess flowline 418, and the secondary flowline 422 are pressurized to a similar pressure (e.g., 175psi) as the LH2 tanks (e.g., the first LH2 tank 320a, the second LH2 tank 320b, etc.). In some examples, the primary flowline 416, the excess flowline 418, and the secondary flowline 422 of FIG. 4b have less mass and have thinner walls because of the lower pressure requirements.

Referring now to FIG. 4c, the third LH2 subcooling system 400c includes a third LH2 subcooler 402c to provide subcooled LH2 to the SC motor. Similar to the first and second LH2 subcoolers 402a, 402b, the third LH2 subcooler 402c splits and subcools the flow of LH2. However, the third subcooler 402c first splits the LH2 upstream of the LH2 pump 438 such that the primary flowline 416 transmits high pressure LH2 (e.g., 300psi, 350psi, 400psi, etc.) and the secondary flowline 422 transmits low pressure LH2 (e.g., 150psi, 175psi, 200psi, etc.). As such, the second split valve 420 is positioned upstream of the LH2 pump 438 and the first split valve 414. In the illustrated example of FIG. 4c, the third LH2 subcooling system 400 includes a first orifice 424a to restrict the flow of LH2 in the primary flowline 416 and to set an upper limit to the flow ratio of the second split valve 420. Furthermore, the third LH2 subcooling system 400 includes a second orifice 424b to restrict the flow of LH2 in the primary flowline 416 and to set an upper limit to the flow ratio of the first split valve 414.

FIG. 5a is a cross-sectional side view of an example first superconducting (SC) motor 500a that can be used in example systems and apparatus disclosed herein. FIG. 5b is a cross-sectional side view of an example second SC motor 500b that can be used in example systems and apparatus disclosed herein. More specifically, the first SC motor 500a or the second SC motor 500b can implement the SC motor 306 of FIG. 3. As such, the first SC motor 500a and the second SC motor 500b are similar, and descriptions of elements in FIG. 5a also apply to like elements of FIG. 5b. The first and second SC motors 500a, 500b include a vacuum vessel 502, a load shaft 504, a plurality of transfer couplings 506, an armature winding 508, a field winding 510, an armature suspension 512, a plurality of cryogenic bearings 514, and a temperature sensor 515. The first and second SC motors 500a, 500b operate at cryogenic temperatures (e.g., 30K, 35K, 40K, etc.) to enable superconductive properties of certain components (e.g., the armature winding 508, the field winding 510, etc.) therein.

The first SC motor 500a of FIG. 5a includes the vacuum vessel 502 to insulate the first SC motor 500a and to maintain the superconductive properties of the components therein (e.g., windings, electromagnets, etc.). The vacuum vessel 502 is an annular cylinder having a central opening 516. In the illustrated examples of FIGS. 5a and 5b, the vacuum vessel 502 includes a single wall with a vacuum internal pressure. In some examples, the vacuum vessel 502 includes a dual wall with an intermediate vacuum pressure to provide thermal insulation. In such examples, one or more vacuum insulated panels (e.g., fumed silica, aerogel, perlite, glass fiber, etc.) can be used to provide additional insulation.

The first SC motor 500a includes the load shaft 504 to provide torque to a propulsor (e.g., the propulsor 312 of FIG. 3). Furthermore, the first SC motor 500a includes the transfer couplings 506 to couple the load shaft 504 to the vacuum vessel 502. In some examples, the plurality of transfer couplings 506 includes a first transfer coupling 506a and a second transfer coupling 506b. Alternatively, the first SC motor 500a includes more than two transfer couplings 506. In the illustrated examples of FIGS. 5a-5b, the transfer couplings 506 are sealed bearings that inhibit external air from entering the vacuum vessel 502. As such, the transfer couplings 506 allow the load shaft 504 to rotate while the vacuum vessel 502 remains stationary and depressurized.

In the illustrated example of FIG. 5a, the first SC motor 500a includes the armature winding 508 to generate electromotive force based on a flow of electrical current (e.g., DC, AC, etc.). In other words, the armature winding 508 includes one or more electromagnets that generate electromagnetic fields that provide torque to the field windings 510, which are permanently charged with circumferentially alternating magnetic poles. As such, the electromagnetic fields of the armature winding 508 apply the electromagnetic force on the field winding 510 in the form of torque. The armature winding 508 is stationary, and the field winding 510 is rotatable. Thus, the torque from the armature winding 508 causes the field winding 510 to rotate. Additionally, the field winding 510 is coupled to the load shaft 504 such that both are rotatably interlocked and the torque of the field winding 510 transfers to the load shaft 504.

In the illustrated example of FIG. 5a, the first SC motor 500a includes the armature suspension 512 to support the armature within the vacuum vessel 502. The armature suspension 512 is coupled to the armature winding 508 and the vacuum vessel 502. In some examples, the armature suspension 512 positions the armature winding 508 relative to the field winding 510 based on the electromagnetic field and/or magnetic flux of the armature winding 508. Although, one armature suspension 512 is shown in FIG. 5a, the first SC motor 500a can include a plurality of armature suspensions 512 to provide additional support to the armature winding 508.

In the illustrated example of FIG. 5a, the first SC motor 500a, 500b includes the cryogenic bearings 514 to support radial loads and dampen radial vibrations of the load shaft 504. The cryogenic bearings 514 can be rolling element bearings, foil bearings, hydrodynamic bearing, and/or the like. In some examples, the cryogenic bearings 514 includes a first cryogenic bearing 512a and a second cryogenic bearing 512b. Alternatively, the first SC motor 500a includes more than two cryogenic bearings 514. The cryogenic bearings 514 are made of materials that are compatible with LH2 and that do not become embrittled from exposure to cryogenic temperatures. Such materials can be austenitic steels (e.g., A286, 216, 316, 22-33-15 (Nitronic 50), etc.), aluminum alloys (e.g.,1100-T0, 2011, 2024, 5086, 6061-T6, 6063, 7039, 7075-T73, etc.), copper alloys (e.g., copper, aluminum bronze, GRCop-84, NARloy-Z, 70-30 brass, etc.), etc.

The first SC motor 504a of FIG. 5a includes the temperature sensor 515 to measure the operating temperature (e.g., the second temperature) of the superconducting components of the first SC motor 504a. The temperature sensor 515 can implement the temperature sensor 318 of FIG. 3. In the illustrated example of FIG. 5a, the temperature sensor 515 is operatively coupled to the vacuum vessel 502 such that the temperature sensor 515 can measure the internal temperature of the vacuum vessel 502. Additionally or alternatively, the temperature sensor 515 can be coupled to the armature winding 508, the field winding 510, and/or another component that operates with a superconducting temperature. In some examples, the temperature sensor 515 is suspended within the vacuum vessel adjacent to (e.g., within +/- one inch) the armature winding 508 or the field winding 510.

In the illustrated examples of FIGS. 5a and 5b, the first SC motor 500a includes a first cooling assembly 517a, and the second SC motor 500b includes a second cooling assembly 517b. The first and second cooling assembly 517a, 517b can cool the first SC motor 500a and the second motor 500b, respectively, to a temperature that satisfies the superconducting threshold. In some examples, the temperature of the subcooled LH2 increases across the first or second cooling assembly 517a, 517b. The first, second, and third LH2 subcooling systems 400a, 400b, 400c can recover the flow of LH2 downstream of the first cooling assembly 517a or the second cooling assembly 517b. Furthermore, the first, second, and third LH2 subcooling systems 400a, 400b, 400c can convert the recovered flow of LH2 to a flow of GH2 using the fourth heat exchanger 406d. In some examples, the flow of LH2 downstream of the first or second cooling assemblies 517a, 517b is at least partially in the gaseous phase, and the fourth heat exchanger 406d warms the GH2 flow in the second LH2 input flowline 412b (FIGS. 4a-4c).

As shown in FIG. 5a, the first SC motor 500a includes a cooling coil 518, an inlet flowline 520, and an outlet flowline 522 to implement the first cooling assembly 517a. In some examples, the cooling coil 518 provides a heat sink for radiative heat to transfer from the armature winding 508, the field winding 510, and/or the vacuum vessel 502 to the subcooled LH2. As such, the cooling coil 518 allows the first SC motor 500a described to have superconductive properties. The cooling coil 518 transmits the subcooled LH2 throughout the first SC motor 500a. Furthermore, the LH2 flows into the first SC motor 500a via the inlet flowline 520, flows through the cooling coil 518, and exits via the outlet flowline 522. In some examples, the inlet flowline 520 corresponds to the LH2 output flowline 338 of FIG. 3 and/or the primary flowline 416 of FIGS. 4a-4c. In some examples, the outlet flowline 522 corresponds to the second LH2 input flowline 334 of FIG. 3 and/or the second LH2 input flowline 412b of FIGS. 4a-4c.

**In** the illustrated example of FIG. 5a, the cooling coil 518 is positioned within the central opening 516. In some examples, the cooling coil 518 wraps circumferentially around the central opening 516 and along the first SC motor 500a from a first end 524 to a second end 526. In some examples, the cooling coil 518 contacts and is coupled to the vacuum vessel 502. Additionally, the cooling coil 518 can have evenly spaced or variably spaced coils based on the heating tendencies of the first SC motor 500a. In other examples, the cooling coil 518 flows within the vacuum vessel 502 in an irregular pattern based on areas of increased heat output.

**In** some examples, the looping (e.g., winding, coiling, etc.) flow path and/or the diameter of the cooling coil 518 reduces the saturated pressure of the LH2 across the first SC motor 500a. In some examples, the pressure drop associated with the cooling coil 518 is similar to the storage pressure of an LH2 tank (e.g., the first LH2 tank 320a, the second LH2 tank 320b, etc.), such as 150psi, 175psi, 200psi, etc. Thus, in some examples, the first SC motor 500a is implemented in conjunction with the first LH2 subcooling system 400a of FIG. 4a or the third LH2 subcooling system 400c of FIG. 4c to overcome this pressure drop. That is, because the LH2 pump 438 of FIGS. 4a and 4c is fluidly coupled to the primary flowline 416 of the first and third LH2 subcooling systems 400a, 400c, the pressure in the inlet flowline 520 is high enough to drive the LH2 to the buffer tank 410 of FIGS. 4a and 4c despite the pressure drop of the cooling coil 518.

Referring now to the illustrative example of FIG. 5b, the second SC motor 500b includes the inlet flowline 520, the outlet flowline 522, a cryostat 528 (e.g., a cryogenic vessel, a cryogenic bath, etc.), an LH2 bus 530, a GH2 bus 532, a heat exchanger 534, and a catalyst 536 to implement the second cooling assembly 517b. In the illustrated example of FIG. 5b, the LH2 bus 530 and the GH2 bus 532 are fluidly coupled to the cryostat 528. The cryostat 528 stores hydrogen in the liquid state and gaseous state, such that the LH2 enters at subcooled temperatures (e.g., 17K, 19K, 21K, etc.) via the LH2 bus 530, cools the second SC motor 500b (e.g., the armature winding 508, etc.), boils-off (e.g., evaporates) into GH2 (or hydrogen vapor), and exits the cryostat 528 via the GH2 bus 532. In some examples, buoyancy-driven flow (or buoyancy-driven convection) influences the flow of hydrogen (LH2 and GH2) through the cryostat 528. As used herein, "buoyancy-driven flow" refers to a flow of a fluid caused by a density difference due to a temperature gradient. Thus, the cooled, denser LH2 is drawn toward the warmer, less dense GH2. As such, the LH2 bus 530 is coupled to the cryostat 528 below the GH2 bus 532. In some examples, the LH2 bus 530 is coupled to an underside 538 of the cryostat 528 and the GH2 bus 532 is coupled to a topside 540 of the cryostat 528.

In some examples, the cryostat 528 is coupled to the transfer couplings 506 and the armature suspension 512. In such examples, first portions (e.g., housings, races, etc.) of the transfer couplings 506 are stationary and a second portions of the transfer couplings 506 are rotatable. As such, the cryostat 528 can be coupled to the first portions to remain stationary relative to the load shaft 504. In other examples, the cryostat 528 is coupled to the vacuum vessel 502. More specifically, the cryostat 528 can be coupled to a wall 542 of the central opening 516 of the second SC motor 500b.

In the illustrated example of FIG. 5b, the second SC motor 500b includes the heat exchanger 534 to convert GH2 from the GH2 bus 532 into LH2 to be transmitted to the LH2 bus 530. The heat exchanger 534 receives subcooled LH2 from the inlet flowline 520, which flows through the heat exchanger 534, absorbs heat from the GH2, and exits the heat exchanger 534 via the outlet flowline 522. In some examples, the subcooled LH2 evaporates in the heat exchanger 534 and enters the outlet flowline 522 as GH2. However, the temperature of the inlet flowline 520 can be low enough (e.g., 10, 12K, etc.) so as to remain in the liquid phase across the heat exchanger 534. In some examples, the outlet flowline 522 leads to another heat exchanger (e.g., the fourth heat exchanger 406d of FIGS. 4a-4c, etc.) in a LH2 subcooling system (e.g., the LH2 subcooling system 308 of FIG. 3, etc.). The heat exchanger 534 can include tubes and/or plates in a configuration that allows the temperature of the GH2 to sufficiently reduce (e.g., from 25K to 18K), such that the LH2 entering the LH2 bus 530 is subcooled.

The second SC motor 500b of FIG. 5 includes a catalyst 536 fluidly coupled to the LH2 bus 530 to convert the ortho hydrogen molecules into para hydrogen molecules. As used herein, ortho and para refer to the energy states of LH2, where ortho hydrogen molecules have two hydrogen atoms with nuclei that spin in the same direction, and para hydrogen molecules have nuclei that spin in opposite directions. In some examples, when hydrogen is in the gaseous state, the ratio of ortho to para hydrogen is 3 to 1 (or 75% ortho). Thus, when the GH2 from the cryostat 528 undergoes liquefaction in the heat exchanger 534, the resulting LH2 has the same ortho to para ratio. In some examples, LH2 in a steady state is composed of 99% para hydrogen molecules. Furthermore, when LH2 includes a concentration of ortho hydrogen (e.g., 75% ortho, 50% ortho, etc.), the ortho hydrogen molecules steadily experience ortho-to-para conversions until the LH2 is at the steady state. Such ortho-para conversions are exothermic reactions that release heat (e.g., 670 kilo Joules per kilogram at 20K, etc.), which can cause the temperature of the LH2 in the cryostat 528 to increase more rapidly. Thus, the second SC motor 500b includes the catalyst 536 to reduce the boil off rate of the LH2 and to increase the cooling properties that the cryostat 528 provides to the armature winding 508, the field winding 510, and/or the load shaft 504.

FIG. 6 is a chart 600 representing thermodynamic relationships of liquid hydrogen. The chart 600 includes a first curve 602 to show density as a function of temperature for LH2. Additionally, the chart 600 includes a second curve 604 to show saturated pressure as a function of temperature for LH2. Referring to FIGS. 6 and 4a-4c, the second curve 604 depicts the function of the expansion valve 426. That is, because the expansion valve 426 reduces the saturated pressure in the secondary flowline 422, the temperature reduces according to the second curve 604. For example, when the expansion valve 426 expands the LH2 from 120psi to 18psi, the temperature also reduces from 30K to 20K. Furthermore, referring to FIGS. 6 and 5b, the first curve 602 depicts the phenomenon of the buoyancy-driven flow of the LH2 in the cryostat 528, the LH2 bus 530, and the GH2 bus 532. For example, as the LH2 cools the second SC motor 500b and the temperature of the LH2 increases from 20K to 30K, the density of the LH2 decreases from 71 kilograms per cubic meter (kg/m³) to 54 kg/m³, which causes the LH2 to rise. Furthermore, as the temperature of the hydrogen continues to rise in the cryostat 528, the density continually decreases (according to the first curve 602) and the hydrogen (e.g., LH2 and GH2) continually rises into the GH2 bus 532.

FIG. 7 is a block diagram of the controller 430 to cool LH2 to subcooled temperatures and to cool the SC motor (e.g., the SC motor 306 of FIG. 3, etc.) with the subcooled LH2. Thus, the controller 430 can ensure that the temperature of the subcooled LH2 satisfies the subcooled threshold and that the temperature of the SC motor satisfies the superconducting threshold. More specifically, the controller 430 can adjust the flowrates in the primary, secondary, and/or excess flowlines 416, 422, and/or 418 based on the output temperature of the LH2 subcooler (e.g., the first, second, third LH2 subcooler 402a, 402b, 402c, etc.) and/or the operating temperature of the SC motor.

The controller 430 of the illustrated example of FIG. 7 includes example interface circuitry 702, example subcooling determination circuitry 704, example superconducting determination circuitry 706, example valve controller circuitry 708, and example data storage 710. The controller 430 of FIGS. 4a, 4b, 4c, and 7 may be instantiated (e.g., creating an instance of, bring into being for any length of time, materialize, implement, etc.) by processor circuitry such as a central processing unit executing instructions. Additionally or alternatively, the controller 430 of FIGS. 4a, 4b, 4c, and 7 may be instantiated (e.g., creating an instance of, bring into being for any length of time, materialize, implement, etc.) by application specific integrated circuit(s) (ASIC(s)) or Field Programmable Gate Array(s) (FPGA(s)) structured to perform operations corresponding to the instructions. It should be understood that some or all of the circuitry of FIG. 7 may, thus, be instantiated at the same or different times. Some or all of the circuitry may be instantiated, for example, in one or more threads executing concurrently on hardware and/or in series on hardware. Moreover, in some examples, some or all of the circuitry of FIG. 7 may be implemented by microprocessor circuitry executing instructions to implement one or more virtual machines and/or containers.

The controller 430 includes the interface circuitry 702 to synchronize operation between input/output device(s) and circuitry (e.g., processor circuitry) of the controller 430. In some examples, the interface circuitry 702 is instantiated by processor circuitry executing interface instructions and/or configured to perform operations such as those represented by the flowchart of FIG(S). 8 and/or 10. In some examples, the aircraft (e.g., the aircraft 10 of FIG. 1, etc.) that implements the supercooling power management system 300 (FIG. 3) includes the input device(s) (e.g., switch(es), dial(s), button(s), knob(s), keyboard(s), touchpad(s), etc.) in a cockpit or another control center onboard. Using such input device(s), the operator can cause the supercooling power management system 300 to start or stop the flow of LH2 to the LH2 subcooling system 308 and the SC motor 306. For example, when the aircraft 10 has landed or is preparing to cease operation, the pilot can provide an input to the controller 430 indicating to the supercooling power management system 300 to stop powering the fuel cell stacks 324a, 324b and/or cooling the SC motor 306. In such an example, the interface circuitry 702 can generate and/or direct a signal to other circuitry of the controller 430, which can cause the LH2 tanks 320a, 320b to close (e.g., shut off flow via a valve).

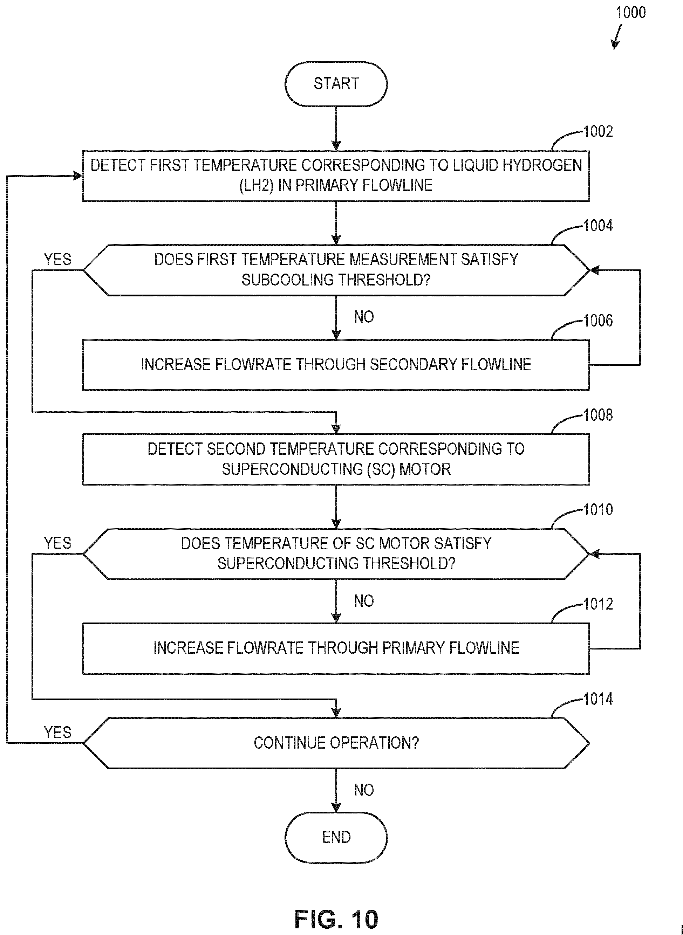

The controller 430 includes the subcooling determination circuitry 704 ("subcooling circuitry 704") to ensure the LH2 subcooler 402a, 402b, 402c provides LH2 to the SC motor 306 at subcooled temperatures. More specifically, the subcooling circuitry 704, obtains data (e.g., first temperature measurements) from the temperature sensor 432 and detects the first temperature corresponding to the LH2 in the primary flowline 418 downstream of the first heat exchanger 406a of FIGS. 4a-4c. Furthermore, the subcooling circuitry 704 can determine whether the first temperature satisfies the subcooling threshold. In some examples, the subcooling circuitry 704 is instantiated by processor circuitry executing subcooling determination instructions and/or configured to perform operations such as those represented by the flowchart of FIG. 10. The subcooling circuitry 704 can function as a closed loop controller that obtains input feedback data (e.g., the first temperature) from the temperature sensor 432 and sends output data (e.g., output flowrates of the second split valve 420) to the valve controller circuitry 708 of the controller 430.

In some examples, the subcooling circuitry 704 obtains data from the temperature sensor 432 at predetermined intervals (e.g., 1 second (s), 5s, 10s, etc.) to detect the current (most up to date) temperature of the LH2 in the primary flowline 416. The subcooling circuitry 704 compares (e.g., calculates a difference between) the first temperature and the subcooling threshold to determine whether the first temperature satisfies (e.g., is less than or equal to) the subcooling threshold. When the subcooling circuitry 704 determines, processes, and/or verifies that the first temperature does not satisfy the subcooling threshold, the subcooling circuitry 704 can send a signal to the valve controller circuitry 708 to increase the flowrate in the secondary flowline 422 and the decrease the flowrate in the primary flowline 416 using the second split valve 420. In some examples, the subcooling circuitry 704 can also send a signal to the valve controller circuitry 708 to decrease the flowrate in the excess flowline 418 and increase the flowrate in the primary flowline 416 using the first split valve 414. Thus, in such examples, the subcooling circuitry 704 can ensure that the supply of subcooled LH2 to the SC motor 306 is not reduced.

The controller 430 of the example of FIG. 7 includes the superconducting determination circuitry 706 ("superconducting circuitry 706") to ensure the LH2 subcooler 402a, 402b, 402c provides enough subcooled LH2 to sufficiently cool the SC motor (e.g., the SC motor 306 of FIG. 3, the first SC motor 500a of FIG. 5a, the second SC motor 500b of FIG. 5, etc.) during operation. More specifically, the superconducting circuitry 706, obtains data (e.g., second temperature measurements) from the temperature sensor 318 and detects the second temperature corresponding to the SC motor 306 (e.g., the armature winding 508 of FIG. 5) of FIG. 3. Furthermore, the superconducting circuitry 706 can determine whether the second temperature satisfies the superconducting threshold.

In some examples, the superconducting circuitry 706 is instantiated by processor circuitry executing superconducting determination instructions and/or configured to perform operations such as those represented by the flowchart of FIG. 10. The superconducting circuitry 706 can function as a closed loop controller that obtains input feedback data (e.g., the second temperature) from the temperature sensor 318 and sends output data (e.g., output flowrates of the first split valve 414) to the valve controller circuitry 708 of the controller 430.

In some examples, the superconducting circuitry 706 obtains data from the temperature sensor 318 at predetermined intervals to detect the current temperature of the SC motor 306. The superconducting circuitry 706 compares the second temperature and the superconducting threshold to determine whether the second temperature satisfies (e.g., is less than or equal to) the superconducting threshold. When the superconducting circuitry 706 determines, processes, and/or verifies that the second temperature does not satisfy the superconducting threshold, the superconducting circuitry 706 can send a signal to the valve controller circuitry 708 to increase the flowrate in the primary flowline 416 and the decrease the flowrate in the excess flowline 418 using the first split valve 414.

The controller 430 of the example of FIG. 7 includes the valve controller circuitry 708 ("valve circuitry 708") to adjust the flowrates in the primary flowline 416, the excess flowline 418, and/or the secondary flowline 422 based on the first temperature and/or the second temperature. More specifically, the valve circuitry 708 receives signals indicating a desired valve position and/or a desired output flowrate from the subcooling circuitry 704 and/or the superconducting circuitry 706. Furthermore, the valve circuitry 708 can determine current flowrates (e.g., effective areas) of the split valves 414, 420 and cause the flowrate(s) of the first split valve 414 and/or the second split valve 420 to change based on the received signals and the current flowrates.

In some examples, the valve circuitry 708 is instantiated by processor circuitry executing valve controller instructions and/or configured to perform operations such as those represented by the flowchart of FIG. 10. In some examples, the valve circuitry 708 is configured as a closed loop controller that receives positional feedback and/or flowrate feedback from the split valves 414, 420 (or flowmeters) and continues to send output signals that cause actuation of a stopper (e.g., plunger, gate, ball, globe, etc.) until the valve circuitry 708 determines that the output flowrates are set to the proper value and/or the stopper is at the proper position to generate proper effective areas in the split valves 414, 420.

The controller 430 includes the data storage 710 to store data (e.g., temperature measurements, thresholds, current operating conditions, etc.) or any information associated with the interface circuitry 702, the subcooling determination circuitry 704, the superconducting determination circuitry 706, and/or the valve controller circuitry 708. The example data storage 710 of the illustrated example of FIG. 7 can be implemented by any memory, storage device and/or storage disc for storing data, such as flash memory, magnetic media, optical media, etc. Furthermore, the data stored in the example data storage 710 can be in any data format such as binary data, comma delimited data, tab delimited data, structured query language (SQL) structures, image data, etc.

While an example implementation of the controller 430 of FIGS. 4a-4c is illustrated in FIG. 7, one or more of the elements, processes, and/or devices illustrated in FIG. 7 may be combined, divided, re-arranged, omitted, eliminated, and/or implemented in another way. Further, the example interface circuitry 702, the example subcooling determination circuitry 704, the example superconducting determination circuitry 706, the example valve controller circuitry 708, and/or, more generally, the example controller 430 of FIGS. 4a-4c, may be implemented by hardware alone or by hardware in combination with software and/or firmware. Thus, for example, any of the example interface circuitry 702, the example subcooling determination circuitry 704, the example superconducting determination circuitry 706, the example valve controller circuitry 708, and/or, more generally, the example controller 430, could be implemented by processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGA(s). Further still, the example controller 430 of FIGS. 4a-4c may include one or more elements, processes, and/or devices in addition to, or instead of, those illustrated in FIG. 7, and/or may include more than one of any or all of the illustrated elements, processes, and devices.

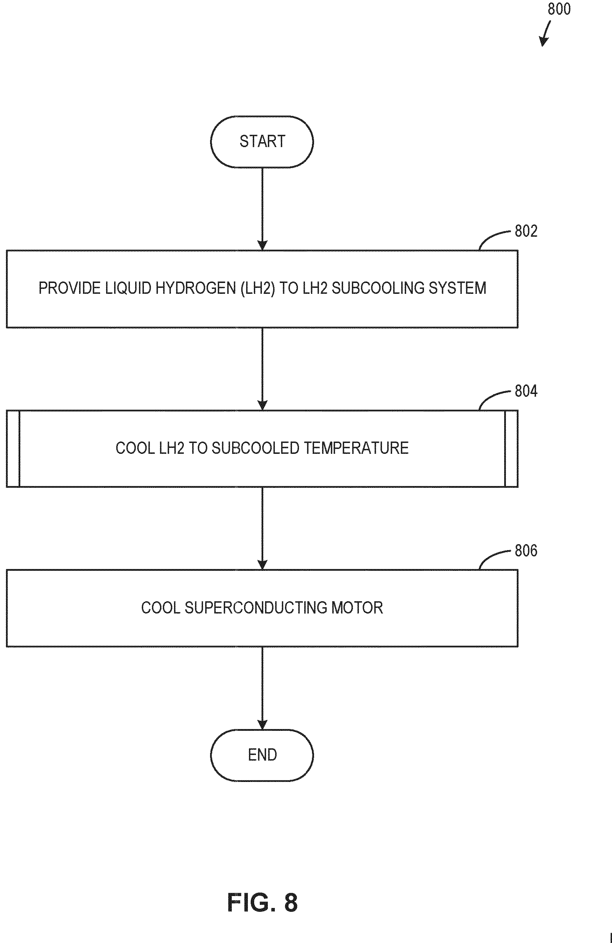

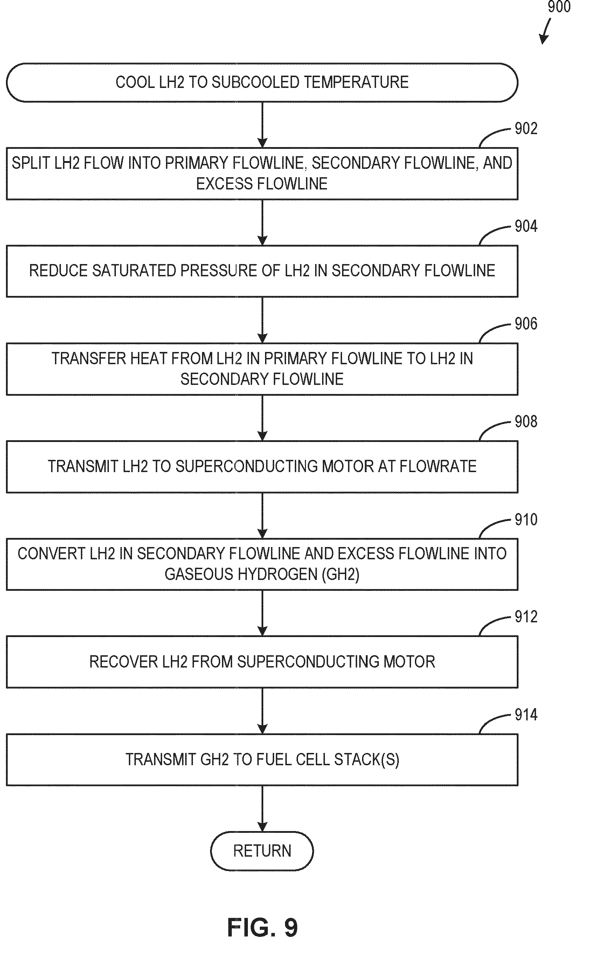

FIG. 8 is a flowchart representative of example methods and/or example operations 800 that are performed by the subcooling power management system 300 of FIG. 3 to cool the SC motor 306 using subcooled LH2 fuel. The operations 800 of FIG. 8 help ensure that the subcooled LH2 used to cool the SC motor 306 is recovered and used to fuel one or more fuel cell stacks (e.g., the first fuel cell stack 324a, the second fuel cell stack 324b, etc.) such that no hydrogen fuel is vented. The operations 800 begin at block 802, at which the LH2 distribution system 302 (e.g., the first LH2 tank 320a, the second LH2 tank 320b, etc.) provides LH2 to the LH2 subcooling system 308. For example, valves coupled to the first and second LH2 tanks 320a, 320b can be opened to begin the flow of LH2. In some examples, the controller 430 of FIGS. 4a-4c causes the LH2 distribution system 302 to transmit LH2 to the LH2 subcooling system 308. For example, the interface circuitry 702 can receive a manual or automatic input to begin powering the fuel cell stacks 324a, 324b. At block 804, the LH2 subcooling system 308 cools the LH2 to a subcooled temperature. More specifically, the LH2 subcooling system 308 can cool the LH2 to a first temperature that satisfies the subcooling threshold. Further details of the operations of block 804 are described below in connection with FIG. 9.

At block 806, the subcooling power management system 300 cools the SC motor with the subcooled LH2 from the LH2 subcooling system 308. In some examples, the first SC motor 500a of FIG. 5a implements the SC motor 306. In such examples, the cooling coil 518 internally transmits the subcooled LH2 to cool the first SC motor 500a via convection cooling. In other examples, the second SC motor 500b implements the SC motor 306. In such examples, the second SC motor 500b operates (rotates) within the cryostat 528 to directly and externally cool components (e.g., the armature winding 508, etc.) via a cryogenic bath. In some examples, the subcooling power management system 300 continues providing LH2, subcooling the LH2, and cooling the SC motor 306 with the subcooled LH2 until a command (e.g., input) is provided to a controller, control system, or controlling device (e.g., the controller 430 of FIGS. 4a-4c, etc.) to end operation.

FIG. 9 is a flowchart representative of example methods and/or example operations 900 that are performed by the LH2 subcooling system 308 of FIG. 3 (e.g., the first, second, or third LH2 subcooling system 400a, 400b, or 400c of FIG. 4a, 4b, or 4c) to cool the LH2 to subcooled temperatures for cooling the SC motor 306 (e.g., the first or second SC motor 500a, or 500b of FIG. 5a or 5b). The operations 900 of FIG. 9 help ensure that the subcooled LH2 leaving the LH2 subcooling system 308 satisfies the subcooling threshold. The operations 900 begin at block 902, at which the LH2 subcooling system 308 splits the incoming flow of LH2 into the primary flowline 416, the secondary flowline 422, and the excess flowline 418. More specifically, the first split valve 414 splits the LH2 into the primary and excess flowlines 416, 418, and the second split valve 420 splits the LH2 into the primary and secondary flowlines 416, 422. In some examples, the first split valve 414 is upstream of the second split valve 420 (FIGS. 4a and 4b). In other examples, the second split valve 420 is upstream of the first split valve 414 (FIG. 4c).

At block 904, the expansion valve 426 reduces the saturated pressure of the LH2 in the secondary flowline 422. As shown in FIG. 6, the temperature of the LH2 decreases as the saturated pressure decreases. Thus, the expansion valve 426 reduces the temperature of the LH2 in the secondary flowline 422 (e.g., from 30K to 15K, etc.). At block 906, the first heat exchanger 406a transfers heat from the LH2 in the primary flowline 416 to the LH2 in the secondary flowline 422. As such, the first heat exchanger 406a cools the LH2 to subcooled temperatures (e.g., 20K, 22K, etc.). The primary flowline 416 can implement the LH2 output flowline 338 of FIG. 3 and transmit the subcooled LH2 to the SC motor 306.

At block 908, the LH2 subcooling system 308 transmits the LH2 to the SC motor 306 at the second flowrate to cool the SC motor 306. As described further in connection with FIG. 10, the controller 430 can adjust the second flowrate of the LH2 based on a temperature of the SC motor 306. At block 910, the LH2 in the excess and secondary flowlines 418, 422 is converted to GH2. More specifically, the second heat exchanger 406b transfers heat from coolant in the coolant bus 434 to the LH2 in the secondary flowline 422 to vaporize the LH2. Similarly, the third heat exchanger 406c transfers heat from the coolant to the LH2 in the excess flowline 418 to vaporize the LH2. At block 912, the LH2 subcooling system 308 recovers the LH2 from the SC motor 306. The subcooled LH2 can convert (fully or partially) to the gaseous phase at the SC motor 306. The LH2 flows from the SC motor 306 to the fourth heat exchanger 406d via the second LH2 input flowline 412b (e.g., the second LH2 input flowline 334). The fourth heat exchanger 406d transfers heat from the coolant to the hydrogen (LH2 and/or GH2) in the second LH2 input flowline 412b such that the hydrogen is completely in the gaseous phase. At block 914, the buffer tank 410 transmits the GH2 to fuel cell stacks (e.g., the first fuel cell stack 324a, the second fuel cell stack 324b, etc.). In some examples, the buffer tank 410 collects the GH2 from the second, third, and fourth heat exchangers 406b-406d and selectively provides the GH2 to the fuel cell stacks at a desired pressure.

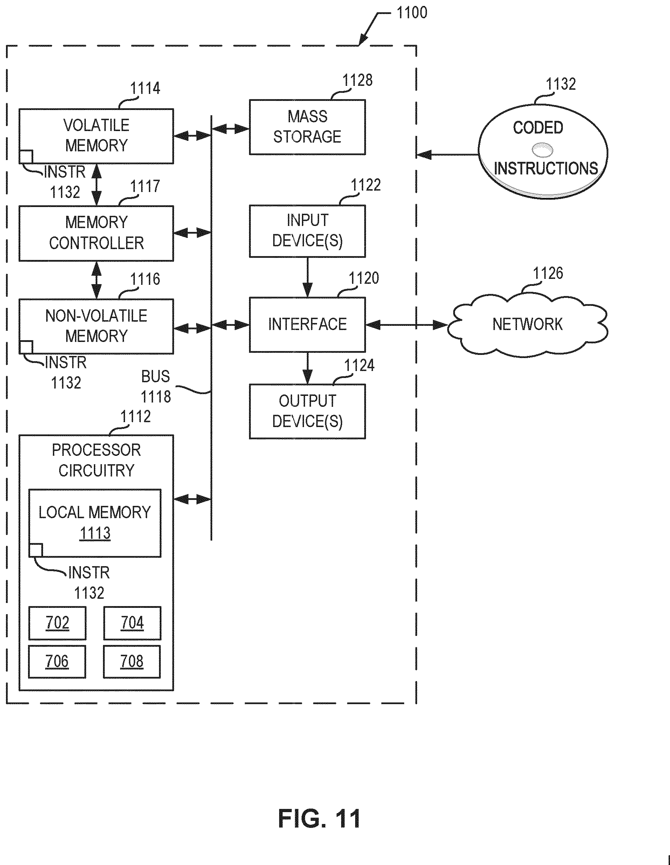

A flowchart representative of example machine readable instructions, which may be executed to configure and/or cause processor circuitry to implement the controller 430 of FIGS. 4a-4c, is shown in FIG. 10. The machine readable instructions may be one or more executable programs or portion(s) of an executable program for execution by processor circuitry, such as processor circuitry 1112 shown in an example processor platform 1100 discussed below in connection with FIG. 11. The program may be embodied in software stored on one or more non-transitory computer readable storage media such as a compact disk (CD), a floppy disk, a hard disk drive (HDD), a solid-state drive (SSD), a digital versatile disk (DVD), a Blu-ray disk, a volatile memory (e.g., Random Access Memory (RAM) of any type, etc.), or a non-volatile memory (e.g., electrically erasable programmable read-only memory (EEPROM), FLASH memory, an HDD, an SSD, etc.) associated with processor circuitry located in one or more hardware devices, but the entire program and/or parts thereof could alternatively be executed by one or more hardware devices other than the processor circuitry and/or embodied in firmware or dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a user) or an intermediate client hardware device (e.g., a radio access network (RAN)) gateway that may facilitate communication between a server and an endpoint client hardware device). Similarly, the non-transitory computer readable storage media may include one or more mediums located in one or more hardware devices. Further, although the example program is described with reference to the flowchart illustrated in FIG. 10, many other methods of implementing the example controller 430 may alternatively be used. For example, the order of execution of the blocks may be changed, and/or some of the blocks described may be changed, eliminated, or combined. Additionally or alternatively, any or all of the blocks may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more hardware devices (e.g., a single-core processor (e.g., a single core central processor unit (CPU)), a multi-core processor (e.g., a multi-core CPU, an XPU, etc.) in a single machine, multiple processors distributed across multiple servers of a server rack, multiple processors distributed across one or more server racks, a CPU and/or a FPGA located in the same package (e.g., the same integrated circuit (IC) package or in two or more separate housings, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., as portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of machine executable instructions that implement one or more operations that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc., in order to execute the machine readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIG. 12 may be implemented using executable instructions (e.g., computer and/or machine readable instructions) stored on at least one non-transitory computer and/or machine readable media and/or medium such as optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms non-transitory computer readable medium, non-transitory computer readable storage medium, non-transitory machine readable medium, and non-transitory machine readable storage medium are expressly defined to include any type of computer readable storage device and/or storage disk and to exclude propagating signals and to exclude transmission media. As used herein, the terms "computer readable storage device" and "machine readable storage device" are defined to include any physical (mechanical and/or electrical) structure to store information, but to exclude propagating signals and to exclude transmission media. Examples of computer readable storage devices and machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer readable instructions, machine readable instructions, etc.

FIG. 10 is a flowchart representative of example machine readable instructions and/or example operations 1000 that may be executed and/or instantiated by processor circuitry to cool LH2 fuel to subcooled temperatures and to cool an SC motor (e.g., the SC motor 306) such that the SC motor operates with superconductive properties. The machine readable instructions and/or the operations 1000 of FIG. 10 begin at block 1002, at which the controller 430 detects a first temperature corresponding to the LH2 in the primary flowline 416. In some examples, the subcooling determination circuitry 704 ("subcooling circuitry 704") obtains a measurement of the first temperature from the temperature sensor 432 via the interface circuitry 702. For example, the subcooling circuitry 704 may detect, using the temperature sensor 432, that the first temperature is 22K.

At block 1004, the controller 430 determines whether first temperature satisfies the subcooling threshold. For example, the subcooling circuitry 704 determines whether the first temperature is at or below the subcooling threshold (e.g., 20K, etc.). When the subcooling circuitry 704 determines that the first temperature does not satisfy the subcooling threshold (e.g., 22K is not less than 20K, etc.), the example operations 1000 proceed to block 1006, where the controller 430 increases the first flowrate through the secondary flowline 422 and reduces the second flowrate through the primary flowline 416. For example, the valve controller circuitry 708 causes the second split valve 420 to adjust effective areas leading to the primary and secondary flowlines 416, 422, which causes the flow ratio in the primary and secondary flowlines 416, 422 to change. In some examples, the valve controller circuitry 708 adjusts the first and second flowrates based on a difference between the first temperature and the subcooling threshold. After the first flowrate in the secondary flowline 422 is increased, example operations 1000 return to block 1004, and a feedback loop continues until the first temperature satisfies the subcooling threshold.

At block 1008, the controller 430 detects a second temperature corresponding to the temperature of the SC motor 306. For example, the superconducting determination circuitry 706 ("superconducting circuitry 706") obtains a measurement of the second temperature from the temperature sensor 318 of FIG. 3 (e.g., the temperature sensor 515 of FIGS. 5a or 5b) via the interface circuitry 702. For example, the superconducting circuitry 706 may detect, using the temperature sensor 318, that the second temperature is 32K.

At block 1010, the controller 430 determines whether second temperature satisfies the superconducting threshold. For example, the superconducting circuitry 706 determines whether the second temperature is at or below the superconducting threshold (e.g., 30K, etc.). When the superconducting circuitry 706 determines that the second temperature does not satisfy the superconducting threshold (e.g., 32K is not less than 30K, etc.), the example operations 1000 proceed to block 1012, where the controller 430 increases the second flowrate through the primary flowline 416 and reduces the third flowrate through the excess flowline 418. For example, the valve controller circuitry 708 causes the first split valve 414 to adjust effective areas leading to the primary and excess flowlines 416, 418, which causes the flow ratio in the primary and excess flowlines 416, 418 to change. In some examples, the valve controller circuitry 708 adjusts the second and third flowrates based on a difference between the second temperature and the superconducting threshold. After the second flowrate in the primary flowline 416 is increased, example operations 1000 return to block 1008, and a feedback loop continues until the second temperature satisfies the superconducting threshold.

At block 1014, the controller 430 determines whether the subcooling power management system 300 is to continue operation. For example, the interface circuitry 702 can detect whether an input signal was received via the input device(s) mentioned previously. The input signal can be a command from an operator indicating that the subcooling power management system 300 is to cease subcooling the SC motor 306 and/or cease providing hydrogen fuel to the fuel cell stacks 324a, 324b. When the interface circuitry 702 determines that operation is to continue, the example operations 1000 return to block 1002. Otherwise, the example operations 1000 end.

FIG. 11 is a block diagram of an example processor platform 1100 structured to execute and/or instantiate the machine readable instructions and/or the operations of FIG. 10 to implement the controller 430 of FIGS. 4a-4c. The processor platform 1100 can be, for example, a personal computer, a workstation, a self-learning machine (e.g., a neural network), a mobile device (e.g., a cell phone, a smart phone, a tablet such as an iPad^{™}), a headset (e.g., an augmented reality (AR) headset, a virtual reality (VR) headset, etc.) or other wearable device, a full authority digital engine (or electronics) control (FADEC), an avionics system, or another type of computing device.

The processor platform 1100 of the illustrated example includes processor circuitry 1112. The processor circuitry 1112 of the illustrated example is hardware. For example, the processor circuitry 1112 can be implemented by one or more integrated circuits, logic circuits, FPGAs, microprocessors, CPUs, GPUs, DSPs, and/or microcontrollers from any desired family or manufacturer. The processor circuitry 1112 may be implemented by one or more semiconductor based (e.g., silicon based) devices. In this example, the processor circuitry 1112 implements the example interface circuitry 702, the example subcooling determination circuitry 704, the example superconducting determination circuitry 706, the example valve controller circuitry 708, and/or, more generally, the example controller 430.

The processor circuitry 1112 of the illustrated example includes a local memory 1113 (e.g., a cache, registers, etc.). The processor circuitry 1112 of the illustrated example is in communication with a main memory including a volatile memory 1114 and a non-volatile memory 1116 by a bus 1118. The volatile memory 1114 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 1116 may be implemented by flash memory and/or any other desired type of memory device. Access to the main memory 1114, 1116 of the illustrated example is controlled by a memory controller 1117.

The processor platform 1100 of the illustrated example also includes interface circuitry 1120. The interface circuitry 1120 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 1122 are connected to the interface circuitry 1120. The input device(s) 1122 permit(s) a user to enter data and/or commands into the processor circuitry 1112. The input device(s) 1122 can be implemented by, for example, a keyboard, a button, a mouse, a touchscreen, a track-pad, a trackball, an isopoint device, and/or a control panel.

One or more output devices 1124 are also connected to the interface circuitry 1120 of the illustrated example. The output device(s) 1124 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a control panel, and/or speaker. The interface circuitry 1120 of the illustrated example, thus, typically includes a graphics driver card, a graphics driver chip, and/or graphics processor circuitry such as a GPU.

The interface circuitry 1120 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1126. The communication can be by, for example, an Ethernet connection, a digital subscriber line (DSL) connection, a telephone line connection, a coaxial cable system, a satellite system, a line-of-site wireless system, a cellular telephone system, an optical connection, etc.

The processor platform 1100 of the illustrated example also includes one or more mass storage devices 1128 to store software and/or data. Examples of such mass storage devices 1128 include magnetic storage devices, optical storage devices, floppy disk drives, HDDs, CDs, Blu-ray disk drives, redundant array of independent disks (RAID) systems, solid state storage devices such as flash memory devices and/or SSDs, and DVD drives.

The machine readable instructions 1132, which may be implemented by the machine readable instructions of FIG. 10, may be stored in the mass storage device 1128, in the volatile memory 1114, in the non-volatile memory 1116, and/or on a removable non-transitory computer readable storage medium such as a CD or DVD.

Example subcooling power management systems and methods for operating the same are disclosed herein. Disclosed subcooling power management systems ensure superconducting motors operate at low enough temperatures to have superconductive properties. Disclosed subcooling power management systems include example LH2 subcooling systems as disclosed herein to cool LH2 fuel to subcooled temperatures to cool the SC motor. Disclosed examples improve the operating efficiency of superconducting motors without venting any hydrogen fuel. The subcooled LH2 used to cool the SC motor is converted to gaseous hydrogen and used to power a plurality of fuel cell stacks, which in turn power the SC motor.

Concerning the units used in this document, the following conversions in SI units apply: 20 psi is 137.8 kPa, 24 psi is 165.4 kPa, 2 psi is 13.7 kPa, 142 psi is 979.1 kPa, 120 psi is 827.4 kPa, 175 psi is 1.207 MPa, 250 psi is 1.724 MPa, 350 psi is 2.41 MPa. 12 bars is 1.2 MPa.

## Claims

1. A system comprising:
a superconducting (SC) motor (306, 500a) configured to power a propulsor of an aircraft, wherein the SC motor (306, 500a) has a cooling assembly (517a);
a liquid hydrogen (LH2) subcooling system including:
a primary flowline (416) fluidly coupled to the cooling assembly (517a);
a secondary flowline (422) fluidly coupled to the primary flowline;
an expansion valve (426) coupled to the secondary flowline (422), the expansion valve (426) configured to reduce a saturated pressure and a temperature of LH2 in the secondary flowline (422); and
a heat exchanger (406a) fluidly coupled to the primary flowline (416) and the secondary flowline (422), the heat exchanger (406a) to transfer heat from the LH2 in the primary flowline (416) to the LH2 in the secondary flowline (422); and
a fuel cell stack (324) coupled to the primary flowline (416) and the cooling assembly (517a).

2. The system of claim 1, further including a controller (430) configured to:
cause the LH2 subcooling system to reduce a first temperature of the LH2 in the primary flowline (416) when the first temperature does not satisfy a subcooling threshold; and
cause the LH2 subcooling system to increase a flowrate of the LH2 in the primary flowline (416) when a second temperature of the SC motor (306, 500a) does not satisfy a superconducting threshold.

3. The system of any preceding claim, wherein the system is a first system (300a), and further comprising a second system (300b), wherein the second system (300b) is the same as the first system (300a), and wherein the first system (300a) is fluidly coupled to the second system (300b).

4. The system of claim 3, further including:
a first LH2 junction to allow the LH2 to flow from the first system to the second system, the first LH2 junction positioned upstream of the heat exchanger; and
a second LH2 junction to allow LH2 to flow from the second system to the first system, the second LH2 junction positioned upstream of the heat exchanger and downstream of the first LH2 junction; and/or
a first gaseous hydrogen (GH2) junction to allow GH2 to flow from the first system to the second system, the first GH2 junction positioned downstream of the heat exchanger; and
a second GH2 junction to allow GH2 to flow from the second system to the first system, the second GH2 junction positioned downstream of the first GH2 junction.

5. The system of any preceding claim, wherein the cooling assembly (517a) includes
(a) a cooling coil (518) positioned within a central opening of the SC motor (306, 500a), the cooling coil fluidly coupled to the primary flowline to internally cool the SC motor via convection cooling; or
(b) wherein the cooling assembly (517a) includes a cryostat (528) to externally cool the SC motor via a cryogenic bath.

6. The system of any preceding claim, wherein the LH2 subcooling system further includes:
a first split valve (414) to split a flow of the LH2 into the primary flowline (416) and an excess flowline (418); and
a second split valve (420) to split the flow of LH2 into the primary flowline (416) and the secondary flowline (422).

7. The system of claim 6, wherein the LH2 subcooling system further includes:
a first LH2 input flowline fluidly coupled to an LH2 tank (320); and
a second LH2 input flowline fluidly coupled to the SC motor (306, 500a).

8. The system of claim 7, wherein the heat exchanger (406a) is a first heat exchanger, and the LH2 subcooling system further includes:
a second heat exchanger (406b) fluidly coupled to the secondary flowline (422);
a third heat exchanger (406c) fluidly coupled to the excess flowline (418); and
a fourth heat exchanger (406d) fluidly coupled to the second LH2 input flowline.

9. The system of claim 8, wherein the LH2 subcooling system further includes a coolant bus fluidly (434) coupled to the second heat exchanger (406b), the third heat exchanger (406c), and the fourth heat exchanger (406d), wherein the coolant bus, the second heat exchanger, the third heat exchanger, and the fourth heat exchanger are configured to convert the LH2 to gaseous hydrogen (GH2) using a coolant in the coolant bus.

10. The system of claim 9, wherein the LH2 subcooling system further includes a buffer tank (410) coupled to the secondary flowline (422), the excess flowline (418), and the second LH2 input flowline, wherein the buffer tank is configured to collect the GH2 and transmit the GH2 to the fuel cell stack;
optionally wherein the LH2 subcooling system further includes:
a compressor coupled to the secondary flowline, the compressor positioned downstream of the second heat exchanger and upstream of the buffer tank; and
a pressure control valve coupled to the excess flowline, the pressure control valve positioned downstream of the first split valve and upstream of the buffer tank.

11. The system of claim 6, wherein the LH2 subcooling system further includes a first orifice (424a) coupled to the primary flowline and positioned downstream of the second split valve (420).

12. The system of claim 11, wherein the LH2 subcooling system further includes an LH2 pump to pressurize the LH2 in at least the primary flowline and the excess flowline;
optionally wherein the LH2 pump is positioned
(a) upstream of the first split valve, and the second split valve is positioned downstream of the first split valve; or
(b) downstream of the second split valve and upstream of the first split valve, further including a second orifice positioned downstream of the second split valve and upstream of the LH2 pump.

13. The system of claim 11, wherein the second split valve (420) is positioned downstream of the first split valve (414).

14. A method comprising:
detecting a first temperature corresponding to liquid hydrogen (LH2) in a primary flowline (416), the primary flowline (416) coupled to a heat exchanger (406a) and a superconducting (SC) motor (306, 500a);
**characterised in that** it comprises determining whether the first temperature satisfies a subcooling threshold; and
increasing a first flowrate of the LH2 through a secondary flowline (422) when the first temperature does not satisfy the subcooling threshold, the secondary flowline (422) coupled to the heat exchanger (406a).

15. The method of claim 14, further including:
detecting a second temperature corresponding to the SC motor (306, 500a);
determining whether the second temperature satisfies a superconducting threshold; and
increasing a second flowrate of the LH2 through the primary flowline (416) when the second temperature does not satisfy the superconducting threshold.

## Patentansprüche

1. System, umfassend:
einen supraleitenden (SC) Motor (306, 500a), der dazu konfiguriert ist, einen Propulsor eines Flugzeugs anzutreiben, wobei der SC-Motor (306, 500a) eine Kühlanordnung (517a) aufweist;
ein Unterkühlungssystem für flüssigen Wasserstoff (LH2), das umfasst:
eine primäre Durchflussleitung (416), die fluidtechnisch mit der Kühlanordnung (517a) gekoppelt ist;
eine sekundäre Durchflussleitung (422), die fluidtechnisch mit der primären Durchflussleitung gekoppelt ist;
ein Expansionsventil (426), das mit der sekundären Durchflussleitung (422) gekoppelt ist, wobei das Expansionsventil (426) dazu konfiguriert ist, einen Sättigungsdruck und eine Temperatur von LH2 in der sekundären Durchflussleitung (422) zu reduzieren; und
einen Wärmetauscher (406a), der fluidtechnisch mit der primären Durchflussleitung (416) und der sekundären Durchflussleitung (422) gekoppelt ist, wobei der Wärmetauscher (406a) Wärme von dem LH2 in der primären Durchflussleitung (416) auf das LH2 in der sekundären Durchflussleitung (422) überträgt; und
einen Brennstoffzellenstapel (324), der mit der primären Durchflussleitung (416) und der Kühlanordnung (517a) gekoppelt ist.

2. System nach Anspruch 1, das ferner eine Steuerung (430) umfasst, die dazu konfiguriert ist, um:
zu bewirken, dass das LH2-Unterkühlungssystem eine erste Temperatur des LH2 in der primären Durchflussleitung (416) reduziert, wenn die erste Temperatur einen Unterkühlungsschwellenwert nicht erfüllt; und
zu bewirken, dass das LH2-Unterkühlungssystem eine Durchflussrate des LH2 in der primären Durchflussleitung (416) erhöht, wenn eine zweite Temperatur des SC-Motors (306, 500a) einen Supraleitungsschwellenwert nicht erfüllt.

3. System nach einem der vorhergehenden Ansprüche, wobei das System ein erstes System (300a) ist und ferner ein zweites System (300b) umfasst, wobei das zweite System (300b) dasselbe wie das erste System (300a) ist und wobei das erste System (300a) mit dem zweiten System (300b) fluidtechnisch gekoppelt ist.

4. System nach Anspruch 3, das ferner umfasst:
eine erste LH2-Verzweigung, um dem LH2 zu ermöglichen, vom ersten System zum zweiten System zu fließen, wobei die erste LH2-Verzweigung stromaufwärts des Wärmetauschers angeordnet ist; und
eine zweite LH2-Verzweigung, um dem LH2 zu ermöglichen, vom zweiten System zum ersten System zu fließen, wobei die zweite LH2-Verzweigung stromaufwärts des Wärmetauschers und stromabwärts der ersten LH2-Verzweigung angeordnet ist; und/oder
eine erste Verzweigung für gasförmigen Wasserstoff (GH2), um dem GH2 zu ermöglichen, vom ersten System zum zweiten System zu fließen, wobei die erste GH2-Verzweigung stromabwärts des Wärmetauschers positioniert ist; und
eine zweite GH2-Verzweigung, um dem GH2 zu ermöglichen, vom zweiten System zum ersten System zu fließen, wobei die zweite GH2-Verzweigung stromabwärts von der ersten GH2-Verzweigung positioniert ist.

5. System nach einem der vorhergehenden Ansprüche, wobei die Kühlanordnung (517a) umfasst:
(a) eine Kühlschlange (518), die in einer zentralen Öffnung des SC-Motors (306, 500a) positioniert ist, wobei die Kühlschlange fluidtechnisch mit der primären Durchflussleitung gekoppelt ist, um den SC-Motor über Konvektionskühlung intern zu kühlen; oder
(b) wobei die Kühlanordnung (517a) einen Kryostaten (528) umfasst, um den SC-Motor über ein kryogenes Bad von außen zu kühlen.

6. System nach einem der vorhergehenden Ansprüche, wobei das LH2-Unterkühlungssystem ferner umfasst:
ein erstes Teilungsventil (414), um einen Durchfluss des LH2 in die primäre Durchflussleitung (416) und eine Überschuss-Durchflussleitung (418) aufzuteilen; und
ein zweites Teilungsventil (420), um den LH2-Durchfluss in die primäre Durchflussleitung (416) und die sekundäre Durchflussleitung (422) aufzuteilen.

7. System nach Anspruch 6, wobei das LH2-Unterkühlungssystem ferner umfasst:
eine erste LH2-Eingangsdurchflussleitung, die fluidtechnisch mit einem LH2-Tank (320) gekoppelt ist; und
eine zweite LH2-Eingangsdurchflussleitung, die fluidtechnisch mit dem SC-Motor (306, 500a) gekoppelt ist.

8. System nach Anspruch 7, wobei der Wärmetauscher (406a) ein erster Wärmetauscher ist und das LH2-Unterkühlungssystem ferner umfasst:
einen zweiten Wärmetauscher (406b), der fluidtechnisch mit der sekundären Durchflussleitung (422) gekoppelt ist;
einen dritten Wärmetauscher (406c), der fluidtechnisch mit der Überschuss-Durchflussleitung (418) gekoppelt ist; und
einen vierten Wärmetauscher (406d), der fluidtechnisch mit der zweiten LH2-Eingangsdurchflussleitung gekoppelt ist.

9. System nach Anspruch 8, wobei das LH2-Unterkühlungssystem ferner einen Kühlmittelbus (434) umfasst, der fluidtechnisch mit dem zweiten Wärmetauscher (406b), dem dritten Wärmetauscher (406c) und dem vierten Wärmetauscher (406d) gekoppelt ist, wobei der Kühlmittelbus, der zweite Wärmetauscher, der dritte Wärmetauscher und der vierte Wärmetauscher dazu konfiguriert sind, das LH2 unter Verwendung eines Kühlmittels im Kühlmittelbus in gasförmigen Wasserstoff (GH2) umwandeln.

10. System nach Anspruch 9, wobei das LH2-Unterkühlungssystem ferner einen Puffertank (410) umfasst, der mit der sekundären Durchflussleitung (422), der Überschuss-Durchflussleitung (418) und der zweiten LH2-Eingangsdurchflussleitung gekoppelt ist, wobei der Puffertank dazu konfiguriert ist, das GH2 zu sammeln und das GH2 an den Brennstoffzellenstapel zu leiten;
wobei optional das LH2-Unterkühlungssystem ferner umfasst:
einen Kompressor, der mit der sekundären Durchflussleitung gekoppelt ist, wobei der Kompressor stromabwärts des zweiten Wärmetauschers und stromaufwärts des Puffertanks positioniert ist; und
ein Druckregelventil, das mit der Überschuss-Durchflussleitung gekoppelt ist, wobei das Druckregelventil stromabwärts des ersten Teilungsventils und stromaufwärts des Puffertanks angeordnet ist.

11. System nach Anspruch 6, wobei das LH2-Unterkühlungssystem ferner einen ersten Durchlass (424a) umfasst, der mit der primären Durchflussleitung gekoppelt ist und stromabwärts des zweiten Teilungsventils (420) positioniert ist.

12. System nach Anspruch 11, wobei das LH2-Unterkühlungssystem ferner eine LH2-Pumpe umfasst, um das LH2 zumindest in der primären Durchflussleitung und der Überschuss-Durchflussleitung unter Druck zu setzen;
wobei die LH2-Pumpe optional
(a) stromaufwärts des ersten Teilungsventils positioniert ist und das zweite Teilungsventil stromabwärts des ersten Teilungsventils positioniert ist; oder
(b) stromabwärts des zweiten Teilungsventils positioniert ist und stromaufwärts des ersten Teilungsventils positioniert ist, wobei ferner ein zweiter Durchlass umfasst ist, der stromabwärts des zweiten Teilungsventils und stromaufwärts der LH2-Pumpe angeordnet ist.

13. System nach Anspruch 11, wobei das zweite Teilungsventil (420) stromabwärts des ersten Teilungsventils (414) positioniert ist.

14. Verfahren, umfassend:
Erfassen einer ersten Temperatur, die dem flüssigen Wasserstoff (LH2) in einer primären Durchflussleitung (416) entspricht, wobei die primäre Durchflussleitung (416) mit einem Wärmetauscher (406a) und einem supraleitenden (SC) Motor (306, 500a) gekoppelt ist;
**dadurch gekennzeichnet, dass** es umfasst:
Bestimmen, ob die erste Temperatur einen Unterkühlungsschwellenwert erfüllt; und
Erhöhen einer ersten Durchflussrate des LH2 durch eine sekundäre Durchflussleitung (422), wenn die erste Temperatur den Unterkühlungsschwellenwert nicht erfüllt, wobei die sekundäre Durchflussleitung (422) mit dem Wärmetauscher (406a) gekoppelt ist.

15. Verfahren nach Anspruch 14, ferner umfassend:
Erfassen einer zweiten Temperatur, die dem SC-Motor (306, 500a) entspricht;
Bestimmen, ob die zweite Temperatur einen Supraleitungsschwellenwert erfüllt; und
Erhöhen einer zweiten Durchflussrate des LH2 durch die primäre Durchflussleitung (416), wenn die zweite Temperatur den Supraleitungsschwellenwert nicht erfüllt.

## Revendications

1. Système comprenant :
un moteur supraconducteur (SC) (306, 500a) configuré pour alimenter un propulseur d'un aéronef, dans lequel le moteur SC (306, 500a) présente un ensemble de refroidissement (517a) ;
un système de sous-refroidissement à hydrogène liquide (LH2) comprenant :
une conduite d'écoulement primaire (416) en communication fluidique avec l'ensemble de refroidissement (517a) ;
une conduite d'écoulement secondaire (422) en communication fluidique avec la conduite d'écoulement primaire ;
un détendeur (426) couplé à la conduite d'écoulement secondaire (422), le détendeur (426) étant configuré pour réduire la pression saturée et la température du LH2 dans la conduite d'écoulement secondaire (422) ; et
un échangeur de chaleur (406a) en communication fluidique avec la conduite d'écoulement primaire (416) et la conduite d'écoulement secondaire (422), l'échangeur de chaleur (406a) étant destiné à transférer la chaleur du LH2 dans la conduite d'écoulement primaire (416) vers le LH2 dans la conduite d'écoulement secondaire (422) ; et
un empilement de piles à combustible (324) couplé à la conduite d'écoulement primaire (416) et à l'ensemble de refroidissement (517a).

2. Système de la revendication 1, comprenant en outre un contrôleur (430) configuré pour :
amener le système de sous-refroidissement à LH2 à réduire une première température du LH2 dans la conduite d'écoulement primaire (416) lorsque la première température ne satisfait pas un seuil de sous-refroidissement ; et
amener le système de sous-refroidissement à LH2 à augmenter un débit du LH2 dans la conduite d'écoulement primaire (416) lorsqu'une seconde température du moteur SC (306, 500a) ne satisfait pas un seuil de supraconductivité.

3. Système de l'une quelconque des revendications précédentes, dans lequel le système est un premier système (300a), et comprenant en outre un second système (300b), dans lequel le second système (300b) est identique au premier système (300a), et dans lequel le premier système (300a) est en communication fluidique avec le second système (300b).

4. Système de la revendication 3, comprenant en outre :
une première jonction de LH2 destinée à permettre au LH2 de s'écouler du premier système vers le second système, la première jonction de LH2 étant positionnée en amont de l'échangeur de chaleur ; et
une seconde jonction de LH2 destinée à permettre au LH2 de s'écouler du second système vers le premier système, la seconde jonction de LH2 étant positionnée en amont de l'échangeur de chaleur et en aval de la première jonction de LH2 ; et/ou
une première jonction d'hydrogène gazeux (GH2) destinée à permettre à du GH2 de s'écouler du premier système vers le second système, la première jonction de GH2 étant positionnée en aval de l'échangeur de chaleur ; et
une seconde jonction de GH2 destinée à permettre au GH2 de s'écouler du second système vers le premier système, la seconde jonction de GH2 étant positionnée en aval de la première jonction de GH2.

5. Système de l'une quelconque des revendications précédentes, dans lequel l'ensemble de refroidissement (517a) comprend
(a) un serpentin de refroidissement (518) positionné à l'intérieur d'une ouverture centrale du moteur SC (306, 500a), le serpentin de refroidissement étant en communication fluidique avec la conduite d'écoulement primaire pour refroidir le moteur SC de l'intérieur par refroidissement par convection ; ou
(b) dans lequel l'ensemble de refroidissement (517a) comprend un cryostat (528) pour refroidir le moteur SC de l'extérieur par bain cryogénique.

6. Système de l'une quelconque des revendications précédentes, dans lequel le système de sous-refroidissement à LH2 comprend en outre :
une première soupape fendue (414) pour répartir l'écoulement du LH2 entre la conduite d'écoulement primaire (416) et une conduite d'écoulement excédentaire (418) ; et
une seconde soupape fendue (420) pour répartir l'écoulement du LH2 entre la conduite d'écoulement primaire (416) et la conduite d'écoulement secondaire (422).

7. Système de la revendication 6, dans lequel le système de sous-refroidissement à LH2 comprend en outre :
une première conduite d'entrée de LH2 en communication fluidique avec un réservoir de LH2 (320) ; et
une seconde conduite d'entrée de LH2 en communication fluidique avec le moteur SC (306, 500a).

8. Système de la revendication 7, dans lequel l'échangeur de chaleur (406a) est un premier échangeur de chaleur, et le système de sous-refroidissement à LH2 comprend en outre :
un deuxième échangeur de chaleur (406b) en communication fluidique avec la conduite d'écoulement secondaire (422) ;
un troisième échangeur de chaleur (406c) en communication fluidique avec la conduite d'écoulement excédentaire (418) ; et
un quatrième échangeur de chaleur (406d) en communication fluidique avec la seconde conduite d'entrée de LH2.

9. Système de la revendication 8, dans lequel le système de sous-refroidissement à LH2 comprend en outre un collecteur de réfrigérant (434) en communication fluidique avec le deuxième échangeur de chaleur (406b), le troisième échangeur de chaleur (406c), et le quatrième échangeur de chaleur (406d), dans lequel le collecteur de réfrigérant, le deuxième échangeur de chaleur, le troisième échangeur de chaleur et le quatrième échangeur de chaleur sont configurés pour convertir le LH2 en hydrogène gazeux (GH2) à l'aide d'un réfrigérant présent dans le collecteur de réfrigérant.

10. Système de la revendication 9, dans lequel le système de sous-refroidissement à LH2 comprend en outre un réservoir tampon (410) couplé à la conduite d'écoulement secondaire (422), à la conduite d'écoulement excédentaire (418) et à la seconde conduite d'entrée de LH2, dans lequel le réservoir tampon est configuré pour collecter le GH2 et acheminer le GH2 vers l'empilement de piles à combustible ;
éventuellement, dans lequel le système de sous-refroidissement à LH2 comprend en outre :
un compresseur couplé à la conduite d'écoulement secondaire, le compresseur étant positionné en aval du deuxième échangeur de chaleur et en amont du réservoir tampon ; et
une vanne de régulation de pression couplée à la conduite d'écoulement excédentaire, la vanne de régulation de pression étant positionnée en aval de la première soupape fendue et en amont du réservoir tampon.

11. Système de la revendication 6, dans lequel le système de sous-refroidissement à LH2 comprend en outre un premier orifice (424a) couplé à la conduite d'écoulement primaire et positionné en aval de la seconde soupape fendue (420).

12. Système de la revendication 11, dans lequel le système de sous-refroidissement à LH2 comprend en outre une pompe à LH2 pour mettre sous pression le LH2 dans au moins la conduite d'écoulement primaire et la conduite d'écoulement excédentaire ;
éventuellement, dans lequel la pompe à LH2 est positionnée
(a) en amont de la première soupape fendue, et la seconde soupape fendue est positionnée en aval de la première soupape fendue ; ou
(b) en aval de la seconde soupape fendue et en amont de la première soupape fendue, comprenant en outre un second orifice positionné en aval de la seconde soupape fendue et en amont de la pompe à LH2.

13. Système de la revendication 11, dans lequel la seconde soupape fendue (420) est positionnée en aval de la première soupape fendue (414).

14. Procédé, comprenant :
la détection d'une première température correspondant à de l'hydrogène liquide (LH2) dans une conduite d'écoulement primaire (416), la conduite d'écoulement primaire (416) étant couplée à un échangeur de chaleur (406a) et à un moteur supraconducteur (SC) (306, 500a);
**caractérisé en ce qu'**il comprend
la détermination de si la première température satisfait un seuil de sous-refroidissement ; et
l'augmentation d'un premier débit du LH2 à travers une conduite d'écoulement secondaire (422) lorsque la première température ne satisfait pas le seuil de sous-refroidissement, la conduite d'écoulement secondaire (422) étant couplée à l'échangeur de chaleur (406a).

15. Procédé de la revendication 14, comprenant en outre :
la détection d'une seconde température correspondant au moteur SC (306, 500a);
la détermination de si la seconde température satisfait un seuil de supraconductivité ; et
l'augmentation d'un second débit du LH2 à travers la conduite d'écoulement primaire (416) lorsque la seconde température ne satisfait pas le seuil de supraconductivité.
